# EUROPÄISCHE PATENTSCHRIFT

(11) **EP 3 312 596 B1**
(45) Veröffentlichungstag und Bekanntmachung des Hinweises auf die Patenterteilung: **17.11.2021**
(21) Anmeldenummer: 17195965.3
(22) Anmeldetag: 11.10.2017
(51) Int. Cl.: G01N 21/89, H04N 5/345, H04N 5/347, G01N 21/88

(54) **VERFAHREN UND VORRICHTUNG ZUR MATERIALBAHNBEOBACHTUNG UND MATERIALBAHNINSPEKTION**
METHOD AND DEVICE FOR MATERIAL WEB OBSERVATION AND MATERIAL WEB INSPECTION
PROCÉDÉ ET DISPOSITIF D'OBSERVATION DE BANDE DE MATÉRIAU ET D'INSPECTION DE BANDE DE MATÉRIAU

(30) Priorität: 21.10.2016 DE 102016220757
(43) Veröffentlichungstag der Anmeldung: 25.04.2018
(73) Patentinhaber: Texmag GmbH Vertriebsgesellschaft, 8800 Thalwil (CH)
(72) Erfinder: HERRMANN, Markus, 86159 Augsburg (DE); KRÖHN, Manfred, 86156 Augsburg (DE)
(74) Vertreter: Peterreins Schley

(56) Entgegenhaltungen:
- EP-A1- 2 003 443
- WO-A1-2012/049370
- US-A1- 2005 226 466
- US-A1- 2010 214 416
- US-A1- 2011 141 269
- US-A1- 2012 013 733
- US-A1- 2015 077 538

## Beschreibung

### Gebiet der Erfindung

Die vorliegende Erfindung betrifft ein Verfahren und eine Vorrichtung zur Materialbahnbeobachtung und Materialbahninspektion für Maschinen mit kontinuierlich fortbewegten Erzeugnissen, wie zum Beispiel Materialbahnen.

### Hintergrund der Erfindung

Bei der Produktion von als Materialbahnen hergestellten Erzeugnissen, insbesondere auch Druckerzeugnisse wie beispielsweise Etiketten oder Verpackungen, ist eine Beobachtung und/oder automatisierte Qualitätssicherung nach dem Druck von hoher Bedeutung, um das Druckergebnis zu überprüfen. Dabei kann neben einer automatisierten Überwachung auch eine Unterstützung einer visuellen Überwachung durch einen Bediener vorgesehen sein. Bei dieser Art der Qualitätssicherung werden die Materialbahnen unter Beobachtungs- oder Inspektionssystemen hindurchgeführt, die Bilder der Materialbahnen aufnehmen. Diese Bilder können durch einen Bediener oder automatisch überprüft werden. Um entsprechende Bereiche der Materialbahn genauer beobachten oder inspizieren zu können, werden Zoomfunktionalitäten vorgesehen. Diese werden in bekannten Anwendungen über Zoomobjektive oder Systeme mit mehreren Kameras (sogenannte Dualview Kamerasysteme) bzw. zusätzlichen verfahrbaren Kameras für Detailaufnahmen (siehe zum Beispiel DE 10 2012 101 310 B3, bzw. das entsprechende Dokument US 2015/077538 A1) bereitgestellt. Weitere Bahnbeobachtungssysteme sind zum Beispiel aus US 2010/0214416 A1, US 2005/0226466 A1, US 2012/0013733 A1 und WO 2012/049370 A1 bekannt.

Nachteilig an derartigen Systemen sind die hohen Kosten sowie die mechanisch und elektrisch aufwändige Umsetzung. Außerdem sind derartige Systeme fehleranfällig und somit wartungsintensiv. Außerdem wird sowohl für die Verwendung von Zoomobjektiven als auch die Verwendung von Systemen mit mehreren Kameras relativ viel Platz benötigt.

Ziel der vorliegenden Erfindung ist es folglich eine Vorrichtung und ein Verfahren bereitzustellen, welche eine Zoomfunktion bereitstellen und dabei eine kompakte Bauweise aufweisen sowie weniger anfällig und weniger komplex sind.

### Zusammenfassung der Erfindung

Die vorliegende Erfindung betrifft ein Verfahren zur Beobachtung und/oder Inspektion von Materialbahnen und gemäß Anspruch 1 und eine Vorrichtung zur Beobachtung und/oder Inspektion von Materialbahnen gemäß Anspruch 19.

Das erfindungsgemäße Verfahren zur Beobachtung und/oder Inspektion von Materialbahnen, die sich in Richtung einer Materialbahnlänge y und/oder in Richtung einer Materialbahnbreite x bewegen, umfasst die folgenden Schritte: Erstellen einer ersten Aufnahme eines ersten Abschnitts einer Materialbahn zu einem ersten Zeitpunkt mit einer Kamera, die einen Matrixchip mit Binning-Funktion umfasst, und Erstellen einer zweiten Aufnahme eines zweiten Abschnitts der Materialbahn zu einem zweiten Zeitpunkt mit der Kamera, wobei der erste Abschnitt und der zweite Abschnitt zwei identische oder korrespondierende Materialbahnabschnitte sind oder der zweite Abschnitt ein Teilabschnitt oder ein korrespondierender Teilabschnitt des ersten Abschnitts der Materialbahn ist, und wobei für die erste Aufnahme eine erste Binning-Stufe verwendet wird, bei der jeweils eine erste Anzahl an Pixeln des Matrixchips unter Verwendung der Binning-Funktion zusammengefasst wird und für die zweite Aufnahme eine zweite Binning-Stufe verwendet wird, bei der jeweils eine zweite Anzahl an Pixeln des Matrixchips unter Verwendung der Binning-Funktion zusammengefasst wird und, wobei die erste Anzahl an Pixeln die jeweils zusammengefasst werden höher ist als die zweite Anzahl an Pixeln die jeweils zusammengefasst werden, wodurch eine physikalische Zoomfunktion für die zweite Aufnahme erzielt wird. Für die erste Aufnahme wird ein erster aktiver Bereich des Matrixchips verwendet, um einen ersten Sichtbereich abzudecken, und für die zweite Aufnahme wird ein zweiter aktiver Bereich des Matrixchips verwendet, um einen zweiten Sichtbereich abzudecken, wobei der erste aktive Bereich und entsprechend der erste Sichtbereich gleich groß oder größer ist als der zweite aktive Bereich und entsprechend der zweite Sichtbereich. Der erste aktive Bereich und der zweite aktive Bereich sind nicht identisch. Vorteilhaft an diesem Verfahren ist insbesondere, dass ohne weitere komplexe Geräte, wie zum Beispiel ein Zoomobjektiv oder zusätzliche Kameras, eine physikalische Zoomfunktion bereitgestellt werden kann.

In Ausgestaltungen, die mit allen bisher beschriebenen Ausgestaltungen kombinierbar sind, kann der zweite aktive Bereich ein Teil des ersten aktiven Bereichs sein. Insbesondere kann der zweite aktive Bereich innerhalb des ersten aktiven Bereichs angeordnet sein. Ein Vorteil dieses Verfahrens ist zum Beispiel das Reduzieren der Datenmengen sowie der benötigten Rechenleistungen durch die Anwendung der Binning-Funktion sowie einer "Region of Interest" (ROI) Funktion, da nur die jeweils benötigte Auflösung bzw. der jeweils benötigte Sichtbereich aufgenommen und verarbeitet wird. Eine reduzierte Datenlast wiederum lässt auch eine Erhöhung der Bildaufnahmefrequenz (Frames per Second: "FPS") zu.

In Ausgestaltungen, die mit allen bisher beschriebenen Ausgestaltungen kombinierbar sind, kann das Verfahren außerdem folgende Schritte umfassen: Darstellen der ersten Aufnahme für einen Benutzer, Erstellen der zweiten Aufnahme in Antwort auf eine Benutzereingabe und Darstellen der zweiten Aufnahme für den Benutzer. Die zweite Binning-Stufe sowie, optional, der zweite Sichtbereich, können in Abhängigkeit von der Benutzereingabe ausgewählt werden.

In Ausgestaltungen, die mit allen bisher beschriebenen Ausgestaltungen kombinierbar sind, können der erste Bereich und der zweite Bereich sich überlappen oder auch nicht überlappen. Das Verfahren kann außerdem die folgenden Schritte umfassen: Auswerten der ersten Aufnahme und Bestimmen einer Position mindestens eines Fehlers auf der Materialbahn und Auswählen der zweiten Binning-Stufe und/oder des zweiten aktiven Bereichs basierend auf der Position des Fehlers auf der Materialbahn. Dies ist vorteilhaft, wenn der Sichtbereich in x- und y-Richtung auf die Position des Fehlers eingeschränkt werden kann. Dann ist es z.B. möglich die Binning-Stufe noch weiter zu reduzieren und somit eine höhere Auflösung für die Zoomfunktion zu erreichen, ohne die Datenmenge der zweiten Aufnahme zu erhöhen. Weiterhin kann auch die zweite Aufnahme zu dem zweiten Zeitpunkt basierend auf der Position des Fehlers erstellt werden.

Der zweite aktive Bereich und/oder der zweite Zeitpunkt der zweiten Aufnahmen können außerdem auch in Abhängigkeit von einer Materialbahngeschwindigkeit, mit der sich die Materialbahn bewegt, bestimmt werden. Für den zweiten aktiven Bereich können eine Lage in Richtung der Materialbahnlänge y, eine Lage in Richtung der Materialbahnbreite x und/oder eine Größe basierend auf der Position des Fehlers und der Größe des Fehlers bestimmt werden. Es kann auch die Position einer Mehrzahl an Fehlern bestimmt werden und eine entsprechende Mehrzahl an zweiten Aufnahmen erstellt werden.

In Ausgestaltungen, die mit allen bisher beschriebenen Ausgestaltungen kombinierbar sind, kann der Matrixchip in erste und zweite Teile aufgeteilt sein, wobei der erste Teil mit der ersten Binning-Stufe arbeitet und für die erste Aufnahme verwendet wird und der zweite Teil mit der zweiten Binning-Stufe arbeitet und für die zweite Aufnahme verwendet wird. Insbesondere kann der zweite Teil in Richtung der Materialbahnbewegung hinter dem ersten Teil liegen. Es kann vorgesehen sein, dass der zweite Teil nur aktiviert wird, wenn in der ersten Aufnahme ein Fehler gefunden wurde. Der erste Teil kann größer sein als der zweite Teil, insbesondere, kann der erste Teil mindestens doppelt so groß, mindestens dreimal so groß, mindestens fünfmal so groß, oder mindestens neunmal so groß wie der zweite Teil sein. Es kann vorgesehen sein, dass kontinuierlich erste Aufnahmen mit dem ersten Teil und zweite Aufnahmen mit dem zweiten Teil gemacht werden. Insbesondere können die zweiten Aufnahmen kontinuierlich in einem Ringspeicher gespeichert werden. Entsprechende zweite Aufnahmen können aus dem Ringspeicher ausgelesen und/oder für einen Benutzer bereitgestellt und/oder zum Beispiel auf einem Monitor dargestellt werden, falls in korrespondierenden ersten Aufnahmen mindestens ein Fehler festgestellt wurde. Sowohl die ersten Aufnahmen als auch die zweiten Aufnahmen können 100% der Materialbahn abdecken.

In Ausgestaltungen, die mit allen bisher beschriebenen Ausgestaltungen kombinierbar sind, können bei der Verwendung von Binning-Stufen der Binning-Funktion die Pixel entlang einer ersten Richtung, insbesondere entlang der Richtung der Materialbahnlänge y, entlang einer zweiten Richtung, insbesondere entlang der Richtung der Materialbahnbreite x oder kombiniert entlang der ersten Richtung und der zweiten Richtung zusammengefasst werden. Bei der Verwendung von Binning-Stufen der Binning-Funktion können die Pixel des Matrixchips zusammengefasst werden, so dass zum Beispiel virtuelle Pixel mit einer Pixelgröße von 1x2, 1x3, 1x4, 1x5, 1x6, 1x7, 1x8, 1x9, 1x10, 1x11, 2x1, 3x1, 4x1, 5x1, 6x1, 7x1, 8x1, 9x1, 10x1, 11x1, 2x2, 3x2, 2x3, 4x2, 2x4, 5x2, 2x5, 6x2, 2x6, 7x2, 2x7, 8x2, 2x8, 9x2, 2x9, 10x2, 2x10, 11x2, 2x11, 3x3, 4x3, 3x4, 5x3, 3x5, 6x3, 3x6, 7x3, 3x7, 8x3, 3x8, 9x3, 3x9, 10x3, 3x10, 11x3, 3x11, 4x4, 5x4, 4x5, 6x4, 4x6, 7x4, 4x7, 8x4, 4x8, 9x4, 4x9, 10x4, 4x10, 11x4, 4x11, 5x5, 6x5, 5x6, 7x5, 5x7, 8x5, 5x8, 9x5, 5x9, 10x5, 5x10, 11x5, 5x11, 6x6, 7x6, 6x7, 8x6, 6x8, 9x6, 6x9, 10x6, 6x10, 11x6, 6x11, 7x7, 8x7, 7x8, 9x7, 7x9, 10x7, 7x10, 11x7, 7x11, 8x8, 9x8, 8x9, 10x8, 8x10, 11x8, 8x11, 9x9, 10x9, 9x10, 11x9, 9x11, 10x10, 11x10, 10x11 oder 11x11 Pixel entstehen.

In Ausgestaltungen, die mit allen bisher beschriebenen Ausgestaltungen kombinierbar sind, kann außerdem ein digitaler Zoom verwendet werden, insbesondere durch Interpolation mehrerer benachbarter physikalischer Pixel bzw. virtueller Pixel, die bei der Verwendung der Binning-Funktion entstanden sind, um Übergangsbereiche bei der Auflösung zwischen entsprechenden Binning-Stufen abzudecken. Dies ist bei dem erfindungsgemäßen Verfahren vorteilhaft, da durch die Binning-Stufen die physikalische Auflösung immer wieder angepasst wird, so dass eine Verschlechterung durch die Verwendung des digitalen Zooms kaum merklich wahrnehmbar ist. In anderen Worten: schon bevor ein Bild durch zu starken digitalen Zoom und entsprechende Interpolation unscharf oder gepixelt aussieht, kann die nächste Binning-Stufe verwendet werden, welche wieder eine höhere physikalische Auflösung bereitstellt.

In Ausgestaltungen, die mit allen bisher beschriebenen Ausgestaltungen kombinierbar sind, können die aktiven Bereiche des Matrixchips und die Binning-Stufen, sowie optional die Anwendung eines digitalen Zooms, für die ersten und zweiten Aufnahmen so aufeinander abgestimmt werden, dass eine stufenlose Zoomfunktion bereitgestellt wird.

In Ausgestaltungen, die mit allen bisher beschriebenen Ausgestaltungen kombinierbar sind, kann das Verfahren außerdem folgenden Schritt umfassen: in Abhängigkeit einer maximalen physikalischen Auflösung des Matrixchips, Bestimmen eines optimalen Verhältnisses aus jeweils aktivem Bereich des Matrixchips und verwendeter Binning-Stufe, sowie insbesondere, Bestimmen der optimalen Eigenschaften für ein optional für die Aufnahmen verwendetes Objektiv.

In Ausgestaltungen, die mit allen bisher beschriebenen Ausgestaltungen kombinierbar sind, kann die Materialbahn sich wiederholende Rapporte aufweisen, wobei pro Rapport ein entsprechendes Trigger-Signal bereitgestellt wird, wobei der erste Zeitpunkt der ersten Aufnahme von einem ersten Trigger-Signal bestimmt werden kann und der zweite Zeitpunkt der zweiten Aufnahme von einem zweiten Trigger-Signal bestimmt werden kann, so dass die ersten und zweiten Abschnitte korrespondierende Abschnitte auf der Materialbahn darstellen.

In Ausgestaltungen, die mit allen bisher beschriebenen Ausgestaltungen kombinierbar sind, kann der Matrixchip eine Auflösung von mindestens 16 Megapixeln, mindestens 32 Megapixeln, mindestens 50 Megapixeln, mindestens 70 Megapixeln oder mindestens 100 Megapixeln aufweist.

In Ausgestaltungen, die mit allen bisher beschriebenen Ausgestaltungen kombinierbar sind, kann das Verfahren außerdem folgenden Schritt umfassen: Erstellen einer zusätzlichen Aufnahme des ersten Abschnitts zu einem dritten Zeitpunkt unter Verwendung der ersten Binning-Stufe, wobei für die zusätzliche Aufnahme des ersten Abschnitts ein anderer aktiver Bereich des Matrixchips verwendet wird als für die erste Aufnahme des ersten Abschnitts. Der dritte Zeitpunkt kann nach dem ersten Zeitpunkt liegen. Insbesondere liegt der dritte Zeitpunkt vor dem zweiten Zeitpunkt oder nach dem zweiten Zeitpunkt. Für die beiden Aufnahmen des ersten Abschnitts können unterschiedliche Beleuchtungsarten zum Beleuchten der Materialbahn verwendet werden. Das Verfahren kann außerdem folgenden Schritt umfassen: Erstellen einer zusätzlichen Aufnahme des zweiten Abschnitts zu einem vierten Zeitpunkt unter Verwendung der zweiten Binning-Stufe, wobei für die zusätzliche Aufnahme des zweiten Abschnitts ein anderer aktiver Bereich des Matrixchips verwendet wird als für die zweite Aufnahme des zweiten Abschnitts. Der vierte Zeitpunkt kann nach dem zweiten oder nach dem dritten Zeitpunkt liegen. Für die zusätzliche Aufnahme des zweiten Abschnitts kann die gleiche Beleuchtungsart wie für die zusätzliche Aufnahme des ersten Abschnitts verwendet werden, insbesondere eine andere Beleuchtungsart als für die zweite Aufnahme des zweiten Abschnitts.

In Ausgestaltungen, die mit allen bisher beschriebenen Ausgestaltungen kombinierbar sind, kann eine Mehrzahl an Kameras verwendet werden, die jeweils einen Matrixchip mit Binning-Funktion aufweisen, wobei jede der Kameras entsprechende Aufnahmen der vorangehenden Ausführungsformen erstellt. Die Kameras können über die Materialbahnbreite x verteilt angeordnet sein, so dass die Sichtbereiche der Kameras in Richtung der Materialbahnbreite x aneinander angrenzen oder überlappen. Von den Aufnahmen der Mehrzahl an Kameras kann eine zusammenhängende Aufnahme bestimmt werden. Außerdem können mechanische Versätze der Kameras in Richtung der Materialbahnlänge y zueinander durch eine entsprechende Auswahl aktiver Bereiche der Matrixchips ausgeglichen werden.

Die Erfindung umfasst außerdem eine Vorrichtung zur Beobachtung und/oder Inspektion von Materialbahnen, die sich in Richtung einer Materialbahnlänge y und/oder einer Materialbahnbreite x bewegen. Die Vorrichtung umfasst eine Kamera, die einen hochauflösenden Matrixchip umfasst, wobei der Matrixchip mit einer Binning-Funktion ausgestattet ist und eine Steuereinheit. Die Steuereinheit ist ausgelegt während der Beobachtung und/oder der Inspektion der Materialbahn zu veranlassen, dass mit der Kamera eine erste Aufnahme eines ersten Abschnitts der Materialbahn zu einem ersten Zeitpunkt erstellt wird, mit der Kamera eine zweite Aufnahme eines zweiten Abschnitts der Materialbahn zu einem zweiten Zeitpunkt erstellt wird, wobei der erste Abschnitt und der zweite Abschnitt zwei identische oder korrespondierende Materialbahnabschnitte sind oder der zweite Abschnitt ein Teilabschnitt oder ein korrespondierender Teilabschnitt des ersten Abschnitts der Materialbahn ist, und wobei für die erste Aufnahme eine erste Binning-Stufe verwendet wird, bei der jeweils eine erste Anzahl an Pixeln des Matrixchips unter Verwendung der Binning-Funktion zusammengefasst wird und für die zweite Aufnahme eine zweite Binning-Stufe verwendet wird, bei der jeweils eine zweite Anzahl an Pixeln des Matrixchips unter Verwendung der Binning-Funktion zusammengefasst wird. Die erste Anzahl an Pixeln die jeweils zusammengefasst werden ist dabei höher als die zweite Anzahl an Pixeln die jeweils zusammengefasst werden, wodurch eine physikalische Zoomfunktion für die zweite Aufnahme erzielt wird. Die Steuereinheit ist außerdem ausgelegt für die erste Aufnahme einen ersten aktiven Bereich des Matrixchips zu verwenden, um einen ersten Sichtbereich abzudecken und für die zweite Aufnahme einen zweiten aktiven Bereich des Matrixchips zu verwenden, um einen zweiten Sichtbereich abzudecken, wobei der erste aktive Bereich und entsprechend der erste Sichtbereich gleich groß oder größer ist als der zweite aktive Bereich und entsprechend der zweite Sichtbereich, und wobei der erste aktive Bereich und der zweite aktive Bereich nicht identisch sind.

In Ausgestaltungen kann die Vorrichtung außerdem ein Objektiv mit fester Brennweite umfassen.

In Ausgestaltungen der Vorrichtung, die mit allen bisher beschriebenen Ausgestaltungen kombinierbar sind, kann der zweite aktive Bereich ein Teil des ersten aktiven Bereichs sein. Insbesondere kann der zweite aktive Bereich innerhalb des ersten aktiven Bereichs liegen.

In Ausgestaltungen der Vorrichtung, die mit allen bisher beschriebenen Ausgestaltungen kombinierbar sind, kann die Vorrichtung außerdem eine Anzeige umfassen und die Steuereinheit kann ausgelegt sein zu veranlassen, dass die erste Aufnahme für einen Benutzer auf der Anzeige dargestellt wird, die zweite Aufnahme in Antwort auf eine Benutzereingabe erstellt wird und die zweite Aufnahme für den Benutzer auf der Anzeige dargestellt wird. Die Steuereinheit kann ausgelegt sein, die zweite Binning-Stufe sowie, optional, den zweiten Sichtbereich, in Abhängigkeit von der Benutzereingabe auszuwählen.

In Ausgestaltungen der Vorrichtung, die mit allen bisher beschriebenen Ausgestaltungen kombinierbar sind können der erste Bereich und der zweite Bereich sich überlappen oder auch nicht überlappen. Die Steuereinheit kann ausgelegt sein die erste Aufnahme auszuwerten und eine Position mindestens eines Fehlers auf der Materialbahn zu bestimmen und die zweite Binning-Stufe und/oder den zweiten aktiven Bereich basierend auf der Position des Fehlers auf der Materialbahn zu bestimmen. Die Steuereinheit kann ausgelegt sein die zweite Aufnahme zu dem zweiten Zeitpunkt basierend auf der Position des Fehlers zu erstellen. Die Steuereinheit kann außerdem ausgelegt sein den zweiten aktiven Bereich und/oder den zweiten Zeitpunkt der zweiten Aufnahme in Abhängigkeit von einer Materialbahngeschwindigkeit, mit der sich die Materialbahn bewegt, zu bestimmen. Außerdem kann die Steuereinheit ausgelegt sein für den zweiten aktiven Bereich eine Lage in Richtung der Materialbahnlänge y, eine Lage in Richtung der Materialbahnbreite x und/oder eine Größe basierend auf der Position des Fehlers und der Größe des Fehlers zu bestimmen. Die Steuereinheit kann ausgelegt sein die Position einer Mehrzahl an Fehlern zu bestimmen und zu veranlassen, dass eine entsprechende Mehrzahl an zweiten Aufnahmen erstellt wird.

In Ausgestaltungen der Vorrichtung, die mit allen bisher beschriebenen Ausgestaltungen kombinierbar sind, kann die Vorrichtung außerdem einen Sensor umfassen, der ausgelegt ist, die zurückgelegte Wegstrecke oder die Geschwindigkeit der Materialbahn in Richtung der Materialbahnlänge zu ermitteln und entsprechende Signale bereitzustellen.

In Ausgestaltungen der Vorrichtung, die mit allen bisher beschriebenen Ausgestaltungen kombinierbar sind, kann der Matrixchip in erste und zweite Teile aufgeteilt sein, wobei der erste Teil mit der ersten Binning-Stufe arbeitet und für die erste Aufnahme verwendet wird und der zweite Teil mit der zweiten Binning-Stufe arbeitet und für die zweite Aufnahme verwendet wird. Insbesondere kann der zweite Teil in Richtung der Materialbahnbewegung hinter dem ersten Teil angeordnet sein. Die Steuereinheit kann ausgelegt sein den zweiten Teil nur zu aktivieren, wenn in der ersten Aufnahme ein Fehler gefunden wurde. Der erste Teil kann größer als der zweite Teil sein. Insbesondere kann der erste Teil mindestens doppelt so groß, mindestens dreimal so groß, mindestens fünfmal so groß, oder mindestens neunmal so groß wie der zweite Teil sein. Die Steuereinheit kann ausgelegt sein zu veranlassen, dass kontinuierlich erste Aufnahmen mit dem ersten Teil und zweite Aufnahmen mit dem zweiten Teil gemacht werden. Insbesondere können die zweiten Aufnahmen kontinuierlich in einem Ringspeicher gespeichert werden. Die Steuereinheit kann ausgelegt sein zu veranlassen, dass entsprechende zweite Aufnahmen aus dem Ringspeicher ausgelesen und/oder für einen Benutzer bereitgestellt und/oder auf der Anzeige dargestellt werden, falls in korrespondierenden ersten Aufnahmen mindestens ein Fehler festgestellt wurde. Die Vorrichtung kann ausgelegt sein, dass sowohl die ersten Aufnahmen als auch die zweiten Aufnahmen 100% der Materialbahn abdecken.

In Ausgestaltungen der Vorrichtung, die mit allen bisher beschriebenen Ausgestaltungen kombinierbar sind, kann die Steuereinheit ausgelegt sein zu veranlassen, dass bei der Verwendung von Binning-Stufen der Binning-Funktion die Pixel entlang einer ersten Richtung, insbesondere entlang der Richtung der Materialbahnlänge y, entlang einer zweiten Richtung, insbesondere entlang der Richtung der Materialbahnbreite x oder kombiniert entlang der ersten Richtung und der zweiten Richtung zusammengefasst werden. Die Steuereinheit kann ausgelegt sein zu veranlassen, dass bei der Verwendung von Binning-Stufen der Binning-Funktion die Pixel des Matrixchips zusammengefasst werden, so dass virtuelle Pixel mit einer Pixelgröße von 1x2, 1x3, 1x4, 1x5, 1x6, 1x7, 1x8, 1x9, 1x10, 1x11, 2x1, 3x1, 4x1, 5x1, 6x1, 7x1, 8x1, 9x1, 10x1, 11x1, 2x2, 3x2, 2x3, 4x2, 2x4, 5x2, 2x5, 6x2, 2x6, 7x2, 2x7, 8x2, 2x8, 9x2, 2x9,10x2, 2x10, 11x2, 2x11, 3x3, 4x3, 3x4, 5x3, 3x5, 6x3, 3x6, 7x3, 3x7, 8x3, 3x8, 9x3, 3x9, 10x3, 3x10, 11x3, 3x11, 4x4, 5x4, 4x5, 6x4, 4x6, 7x4, 4x7, 8x4, 4x8, 9x4, 4x9, 10x4, 4x10, 11x4, 4x11, 5x5, 6x5, 5x6, 7x5, 5x7, 8x5, 5x8, 9x5, 5x9, 10x5, 5x10, 11x5, 5x11, 6x6, 7x6, 6x7, 8x6, 6x8, 9x6, 6x9, 10x6, 6x10, 11x6, 6x11, 7x7, 8x7, 7x8, 9x7, 7x9, 10x7, 7x10, 11x7, 7x11, 8x8, 9x8, 8x9, 10x8, 8x10, 11x8, 8x11, 9x9, 10x9, 9x10, 11x9, 9x11, 10x10, 11x10, 10x11 oder 11x11 Pixel entstehen.

In Ausgestaltungen der Vorrichtung, die mit allen bisher beschriebenen Ausgestaltungen kombinierbar sind, kann die Steuereinheit außerdem ausgelegt sein einen digitalen Zoom zu verwenden, insbesondere durch Interpolation mehrerer benachbarter physikalischer Pixel bzw. virtueller Pixel, die bei der Verwendung der Binning-Funktion entstanden sind, um Übergangsbereiche bei der Auflösung zwischen entsprechenden Binning-Stufen abzudecken.

In Ausgestaltungen der Vorrichtung, die mit allen bisher beschriebenen Ausgestaltungen kombinierbar sind, kann die Steuereinheit ausgelegt sein aktive Bereiche des Matrixchips und die Binning-Stufen, sowie optional die Anwendung eines digitalen Zooms, für die ersten und zweiten Aufnahmen so aufeinander abzustimmen, dass eine stufenlose Zoomfunktion bereitgestellt wird.

In Ausgestaltungen der Vorrichtung, die mit allen bisher beschriebenen Ausgestaltungen kombinierbar sind, kann die Steuereinheit außerdem ausgelegt sein zu veranlassen, dass in Abhängigkeit einer maximalen physikalischen Auflösung des Matrixchips, ein optimales Verhältnis aus jeweils aktivem Bereich des Matrixchips und verwendeter Binning-Stufe bestimmt wird.

In Ausgestaltungen der Vorrichtung, die mit allen bisher beschriebenen Ausgestaltungen kombinierbar sind, kann die Materialbahn sich wiederholende Rapporte aufweisen, wobei die Steuereinheit ausgelegt sein kann entsprechende Trigger-Signale zu verarbeiten, die der Vorrichtung pro Rapport bereitgestellt werden. Insbesondere kann die Steuereinheit ausgelegt sein den ersten Zeitpunkt der ersten Aufnahme basierend auf einem ersten Trigger-Signal zu bestimmen und den zweiten Zeitpunkt der zweiten Aufnahme basierend auf einem zweiten Trigger-Signal zu bestimmen, so dass die ersten und zweiten Abschnitte korrespondierende Abschnitte auf der Materialbahn darstellen. Die Trigger-Signale können von der Steuereinheit bereitgestellt werden, wobei die Steuereinheit Informationen von dem Sensor erhält. Insbesondere kann die Steuereinheit als externes Gerät vorgesehen sein oder direkt in die Kamera integriert sein.

In Ausgestaltungen der Vorrichtung, die mit allen bisher beschriebenen Ausgestaltungen kombinierbar sind, kann der Matrixchip eine Auflösung von mindestens 16 Megapixeln, mindestens 32 Megapixeln, mindestens 50 Megapixeln, mindestens 70 Megapixeln oder mindestens 100 Megapixeln aufweisen.

In Ausgestaltungen der Vorrichtung, die mit allen bisher beschriebenen Ausgestaltungen kombinierbar sind, kann die Steuereinheit ausgelegt sein zu veranlassen, dass eine zusätzliche Aufnahme des ersten Abschnitts zu einem dritten Zeitpunkt unter Verwendung der ersten Binning-Stufe erstellt wird, wobei für die zusätzliche Aufnahme des ersten Abschnitts ein anderer aktiver Bereich des Matrixchips verwendet wird als für die erste Aufnahme des ersten Abschnitts. Die Steuereinheit kann außerdem ausgelegt sein zu veranlassen, dass der dritte Zeitpunkt nach dem ersten Zeitpunkt liegt, insbesondere, wobei der dritte Zeitpunkt vor dem zweiten Zeitpunkt liegt oder nach dem zweiten Zeitpunkt liegt. Die Vorrichtung kann erste und zweite Beleuchtungseinrichtungen aufweisen, so dass für die beiden Aufnahmen des ersten Abschnitts unterschiedliche Beleuchtungsarten zum Beleuchten der Materialbahn verwendet werden können. Die erste und/oder die zweite Beleuchtungseinrichtung können bezogen auf die Richtung der Materialbahnbreite x traversierend angeordnet sein. Die Steuereinheit kann ausgelegt sein zu veranlassen, dass eine zusätzliche Aufnahme des zweiten Abschnitts zu einem vierten Zeitpunkt unter Verwendung der zweiten Binning-Stufe erstellt wird, wobei für die zusätzliche Aufnahme des zweiten Abschnitts ein anderer aktiver Bereich des Matrixchips verwendet wird als für die zweite Aufnahme des zweiten Abschnitts. Insbesondere können für die beiden Aufnahmen des zweiten Abschnitts unterschiedliche Beleuchtungsarten zum Beleuchten der Materialbahn verwendet werden. Die Steuereinheit kann ausgelegt sein zu veranlassen, dass der vierte Zeitpunkt nach dem zweiten Zeitpunkt oder nach dem dritten Zeitpunkt liegt.

In Ausgestaltungen der Vorrichtung, die mit allen bisher beschriebenen Ausgestaltungen kombinierbar sind, kann die Vorrichtung eine Mehrzahl an Kameras aufweisen, die jeweils einen Matrixchip mit Binning-Funktion umfassen, wobei die Steuereinheit ausgelegt ist zu veranlassen, dass jede der Kameras entsprechende Aufnahmen der vorangehenden Ausführungsformen erstellt. Die Kameras können über die Materialbahnbreite x verteilt angeordnet sein, so dass die Sichtbereiche der Kameras in Richtung der Materialbahnbreite x aneinander angrenzen oder überlappen. Die Steuereinheit kann außerdem ausgelegt sein von den Aufnahmen der Mehrzahl an Kameras eine zusammenhängende Aufnahme zu bestimmen. Die Steuereinheit kann ausgelegt sein mechanische Versätze der Kameras in Richtung der Materialbahnlänge y zueinander durch eine entsprechende Auswahl aktiver Bereiche der Matrixchips auszugleichen.

In Ausgestaltungen der Vorrichtung, die mit allen bisher beschriebenen Ausgestaltungen kombinierbar sind, kann die Vorrichtung einen Materialbahn-Positionssensor aufweisen und die Steuereinheit kann ausgelegt sein zu veranlassen, dass basierend auf einem Signal des Materialbahn-Positionssensors die aktiven Bereiche des Matrixsensors bestimmt werden, insbesondere eine Größe und/oder eine Position der aktiven Bereiche in Richtung der Materialbahnbreite x eingestellt wird.

In Ausgestaltungen der Vorrichtung, die mit allen bisher beschriebenen Ausgestaltungen kombinierbar sind, kann mindestens eine Kamera auf einer Vorderseite der Materialbahn und mindestens eine Kamera auf einer Rückseite der Materialbahn vorgesehen sein, wobei die Steuereinheit ausgelegt sein kann zu veranlassen, dass jede der Kameras entsprechende Aufnahmen der vorangehenden Ausführungsformen erstellt.

Weitere Einzelheiten und Merkmale der Erfindung werden anhand der folgenden Figuren beschrieben.

### Kurzbeschreibung der Figuren

- Fig. 1: zeigt eine schematische Darstellung einer erfindungsgemäßen Vorrichtung zur Beobachtung und/oder Inspektion einer Materialbahn gemäß einem Ausführungsbeispiel;
- Fig. 2: zeigt eine schematische Darstellung eines Matrixsensors zur Erläuterung der Binning-Funktion;
- Fig. 3A und Fig. 3B: zeigen zwei schematische Darstellungen eines Matrixchips mit entsprechend aktivierten Bereichen, beispielsweise bei der Verwendung für eine Bahnbeobachtung;
- Fig. 4A und Fig. 4B: zeigen zwei schematische Darstellungen eines Matrixchips mit entsprechend aktivierten Bereichen, beispielsweise bei der Verwendung für eine Inspektion;
- Fig. 5A und Fig. 5B: zeigen zwei weitere schematische Darstellungen eines Matrixchips mit entsprechend aktivierten Bereichen, beispielsweise bei der Verwendung für eine Inspektion;
- Fig. 6A bis Fig. 6C: zeigen drei weitere schematische Darstellungen eines Matrixchips mit entsprechend aktivierten Bereichen, beispielsweise bei der Verwendung für eine Inspektion.

### Detaillierte Beschreibung

Der im Folgenden verwendete Begriff Materialbahn ist breit zu verstehen und bezieht sich auf alle Arten von Produkten, die bei der Verarbeitung automatisiert bewegt werden und für die eine Beobachtung oder Inspektion erforderlich ist. Dazu gehören unter anderen bedruckte Papiererzeugnisse, Stoffe und Gewebe, Verpackungen bzw. Verpackungsrohmaterial, Etiketten, usw. Die Materialbahnen müssen dabei nicht endlos fortlaufend ausgestaltet sein, sondern können auch die Form von aufeinanderfolgenden Bögen haben. Die erfindungsgemäße Vorrichtung sowie das erfindungsgemäße Verfahren können für eine Beobachtung und/oder Inspektion für alle diese Produkte eingesetzt werden.

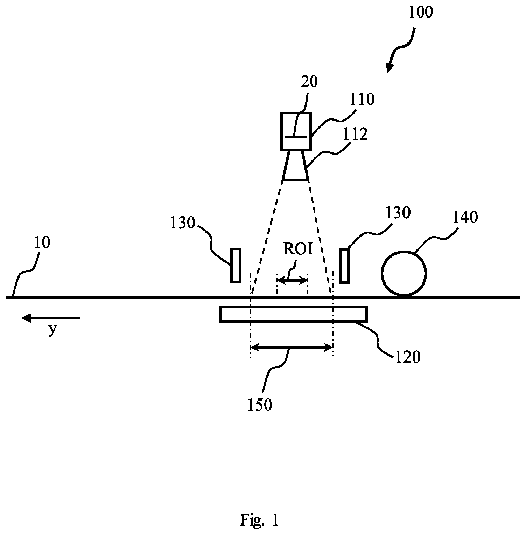

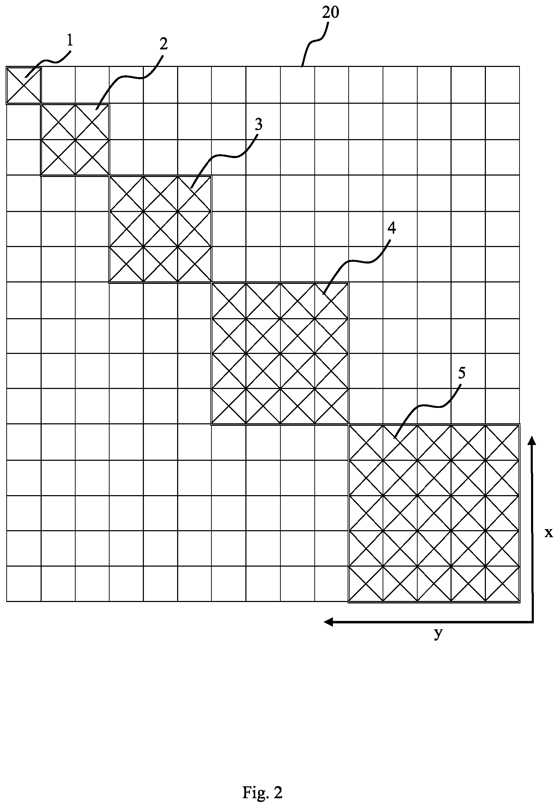

**Fig. 1** zeigt schematisch eine seitliche Ansicht einer Vorrichtung 100 zur Beobachtung und/oder Inspektion einer Materialbahn 10. Die Vorrichtung 100 kann für alle im Folgenden beschriebenen Verfahren zur Beobachtung und/oder Inspektion einer Materialbahn verwendet werden. Neben der Bahnbeobachtung/Inspektion kann die Vorrichtung ebenfalls zur Farbdichtemessung oder spektralen Farbmessung eingesetzt werden. Die Vorrichtung 100 umfasst eine Kamera 110, die mit einem Matrixchip 20 mit Binning-Funktion und einer "Region of Interest" (ROI) Funktion ausgestattet ist, zum Beispiel einem CCD oder CMOS Sensor. Die Kamera 110 kann für 1D, 2D und/oder 3D Aufnahmen geeignet sein sowie eine Farb- oder Schwarz-Weiß-Kamera sein. Die Kamera 110 bzw. der Sichtbereich der Kamera 110 (bzw. der Kameras bei Verwendung eines Kamera-Arrays, dazu weiter unten mehr) kann entweder parallel oder traversierend bezogen auf die Richtung der Materialbahnbreite (entsprechend der Richtung x in **Fig. 2** bezogen auf den entsprechend angeordneten Matrixchip 20 dargestellt) angeordnet sein. **Fig. 1** zeigt außerdem unterschiedliche Einrichtungen zur Beleuchtung der Materialbahn 10. Im gezeigten Beispiel sind eine bzw. zwei Beleuchtungseinrichtung 130 oberhalb der Materialbahn 10 und eine Beleuchtungseinrichtung 120 unterhalb der Materialbahn 10 vorgesehen. Alternative Ausführungen können auch nur eine Beleuchtungseinrichtung oder mehr als zwei Beleuchtungseinrichtungen aufweisen, so dass für sämtliche im Folgenden beschriebenen Aufnahmen bzw. Aufnahmekombinationen unterschiedliche Beleuchtungsarten zum Beleuchten der Materialbahn 10 verwendet werden können.

Außerdem in **Fig. 1** zu sehen ist ein Objektiv 112 für die Kamera 110, das vorzugsweise eine feste Brennweite (Fixfokus) aufweist. Zusätzlich kann ein Sensor 140 vorgesehen sein, der z.B. die zurückgelegte Wegstrecke bzw. die aktuelle Geschwindigkeit der Materialbahn misst. Als Sensor können hier zum Beispiel Encoder, Näherungsschalter, Druckmarkensensoren und direkte Geschwindigkeitssensoren zum Einsatz kommen. Es können z.B. Drehgeber (Inkrementaldrehgeber oder Drehimpulsgeber) eingesetzt werden, die meist mit einem Laufrad verwendet werden. Das Laufrad mit bekanntem Abrollumfang sitzt auf der Materialbahn auf und es werden zum Beispiel ein oder mehrere Impulse pro Umdrehung erzeugt. Durch die Anzahl der erfassten Impulse kann der zurückgelegte Weg der Materialbahn in Richtung der Materialbahnlänge y bestimmt werden. Die Materialbahngeschwindigkeit kann dann zum Beispiel über die Anzahl der erfassten Impulse pro Zeiteinheit und über den zurückgelegten Weg bestimmt, also über die Werte Zeit und Weg ermittelt werden. Die Materialbahn wird vorzugsweise in Richtung einer Materialbahnlänge y bewegt, kann aber auch in Richtung einer Materialbahnbreite x bewegt werden. Die Materialbahn 10 kann zum Beispiel mit einer Bahngeschwindigkeit von mindestens 150 m/min, insbesondre mindestens 500 m/min bevorzugt mindestens 900 m/min in Richtung der Materialbahnlänge y bewegt werden.

Außerdem umfasst die Vorrichtung 100 noch eine (in **Fig. 1** nicht dargestellte) Steuereinheit, die sämtliche Aktivitäten der Vorrichtung steuert und entsprechende Signale, zum Beispiel von dem Sensor 140 oder weiteren externen Sensoren, verarbeitet. Die Steuereinheit kann eine Rechnereinheit umfassen oder Teil einer Rechnereinheit oder einer Prüfungseinheit sein. Zusätzlich können ein oder mehrere Monitore zur visuellen Anzeige der Aufnahmen der Kamera bzw. der erstellten Bildsequenzen vorgesehen sein (in **Fig. 1** nicht dargestellt).

**Fig. 2** zeigt schematisch einen Matrixchip 20 und dient der Erläuterung der Binning-Funktion des Matrixchips 20. Unter Binning versteht man das Zusammenfassen benachbarter physikalischer Pixel bereits auf dem Matrixchips 20 selbst zu einem virtuellen Pixel. Durch das Zusammenfassen kann einerseits zum Beispiel eine höhere Lichtempfindlichkeit pro virtuellem Bildpunkt erreicht werden (z.B. um den Signal-Rauschabstand zu verbessern). Andererseits wird jedoch die Bildauflösung entsprechend der Anzahl der zusammengefassten Pixel reduziert wodurch die Aufnahme gröber wird. Eine geringere Bildauflösung hat allerdings den Vorteil, dass die Bandbreite bei der Übertragung der Daten einer Aufnahme an ein nachfolgendes Verarbeitungssystem reduziert werden kann. Eine geringere Datenmenge pro Aufnahme erlaubt es außerdem die Bildaufnahmefrequenz ("frames per second" - FPS) zu erhöhen.

In **Fig. 2** sind nun fünf verschiedene Binning-Stufen exemplarisch dargestellt (wobei die Gesamtzahl der Pixel des Matrixchips 20 rein schematisch zu verstehen ist): beginnend von links oben nach rechts unten kein Binning beziehungsweise ein 1x1 Binning 1, ein 2x2 Binning 2, ein 3x3 Binning 3, ein 4x4 Binning 4 und ein 5x5 Binning 5, wobei entsprechend 1, 4, 9, 16 bzw. 25 physikalische Pixel zu einem virtuellen Pixel zusammengefasst wurden.

Bei der Verwendung von Binning-Stufen der Binning-Funktion können die physikalischen Pixel des Matrixchips 20 entlang einer ersten Richtung, insbesondere entlang der Richtung der Materialbahnlänge y, entlang einer zweiten Richtung, insbesondere entlang der Richtung der Materialbahnbreite x oder kombiniert entlang der ersten Richtung und der zweiten Richtung zusammengefasst werden. Das Binning bzw. die Binning-Stufen können frei bestimmt werden, so dass der Matrixsensor 20 zum Beispiel ausgelegt sein kann, dass bei der Verwendung von Binning-Stufen der Binning-Funktion die Pixel des Matrixchips 20 zusammengefasst werden, so dass virtuelle Pixel mit einer Pixelgröße von 1x2, 1x3, 1x4, 1x5, 1x6, 1x7, 1x8, 1x9, 1x10, 1x11, 2x1, 3x1, 4x1, 5x1, 6x1, 7x1, 8x1, 9x1, 10x1, 11x1, 2x2, 3x2, 2x3, 4x2, 2x4, 5x2, 2x5, 6x2, 2x6, 7x2, 2x7, 8x2, 2x8, 9x2, 2x9,10x2, 2x10, 11x2, 2x11, 3x3, 4x3, 3x4, 5x3, 3x5, 6x3, 3x6, 7x3, 3x7, 8x3, 3x8, 9x3, 3x9, 10x3, 3x10, 11x3, 3x11, 4x4, 5x4, 4x5, 6x4, 4x6, 7x4, 4x7, 8x4, 4x8, 9x4, 4x9, 10x4, 4x10, 11x4, 4x11, 5x5, 6x5, 5x6, 7x5, 5x7, 8x5, 5x8, 9x5, 5x9, 10x5, 5x10, 11x5, 5x11, 6x6, 7x6, 6x7, 8x6, 6x8, 9x6, 6x9, 10x6, 6x10, 11x6, 6x11, 7x7, 8x7, 7x8, 9x7, 7x9, 10x7, 7x10, 11x7, 7x11, 8x8, 9x8, 8x9, 10x8, 8x10, 11x8, 8x11, 9x9, 10x9, 9x10, 11x9, 9x11, 10x10, 11x10, 10x11 oder 11x11 Pixel entstehen. Diese Auflistung an Beispielen soll keine Einschränkung darstellen. Letztendlich kann die Verteilung/Anzahl der zusammengefassten Pixel je nach Anwendung und maximaler physikalischer Auflösung des verwendeten Matrixchips 20 frei festgelegt werden und ist rein durch die physikalische Auflösung des verwendeten Matrixchips 20 begrenzt. Dies ist insbesondere in Hinblick auf die schnelle Weiterentwicklung im Bereich der Matrixsensoren sowie der möglichen Datenübertragungsraten zu sehen, so dass die hierin Beschriebenen Verfahren und Vorrichtungen keineswegs auf die aktuell verfügbaren Matrixsensoren / Datenraten beschränkt zu sehen sind.

Das erfindungsgemäße Verfahren nutzt die Binning-Funktion des Matrixchips 20 auf eine neue Art und ermöglicht eine physikalische Zoomfunktion ohne weitere komplexe Geräte wie zusätzliche verfahrbare Kameras oder Zoomobjektive. Dies wird durch folgende Vorgehensweise ermöglicht: Erstellen einer ersten Aufnahme eines ersten Abschnitts einer Materialbahn 10 zu einem ersten Zeitpunkt mit der Kamera 110 (die den Matrixchip 20 mit Binning-Funktion umfasst) und Erstellen einer zweiten Aufnahme eines zweiten Abschnitts der Materialbahn 10 zu einem zweiten Zeitpunkt mit der Kamera 110. Für die erste Aufnahme wird eine erste Binning-Stufe verwendet, bei der jeweils eine erste Anzahl an Pixeln des Matrixchips 20 unter Verwendung der Binning-Funktion zusammengefasst wird und für die zweite Aufnahme wird eine zweite Binning-Stufe verwendet, bei der jeweils eine zweite Anzahl an Pixeln des Matrixchips 20 unter Verwendung der Binning-Funktion zusammengefasst wird. Die erste Anzahl an Pixeln die jeweils zusammengefasst werden ist höher oder niedriger als die zweite Anzahl an Pixeln die jeweils zusammengefasst werden, wodurch eine physikalische Zoomfunktion für die zweite Aufnahme erzielt wird.

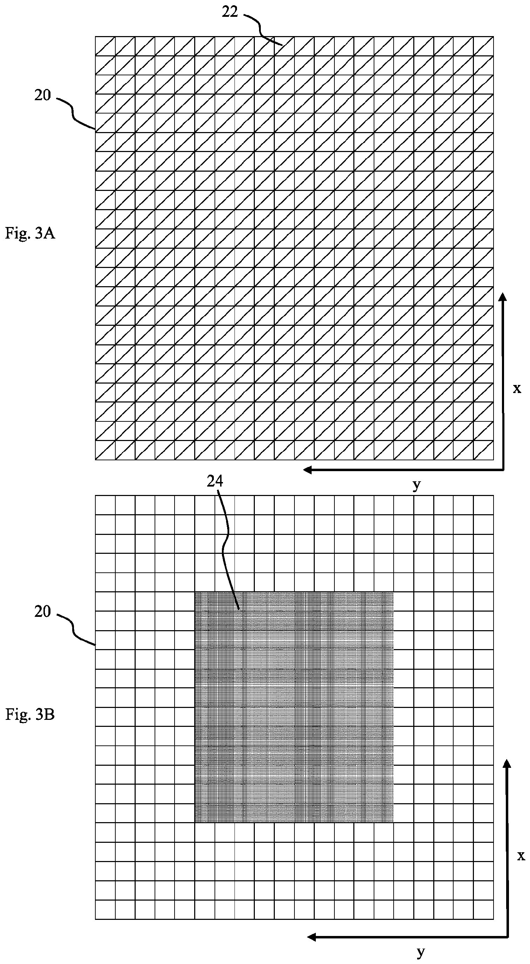

Das erfindungsgemäße Verfahren kann bei unterschiedlichen Anwendungen Verwendung finden. Ein erstes Beispiel ist die Bahnbeobachtung, bei der kontinuierlich Aufnahmen mit möglichst gleich bleibender Auflösung über die Zoomstufen beobachtet werden. Die verwendete Zoomstufe kann zum Beispiel festgelegt oder entsprechend einer Eingabe eines Benutzers erfolgen. Das heißt, ein Benutzer kann die zu wählende Zoomstufe vorgeben, mit der die Aufnahmen gemacht werden. Dies ist beispielhaft in **Fig. 3A** und **3B** dargestellt. **Fig. 3A** zeigt einen Zeitpunkt einer Aufnahme, bei dem das komplette Sichtfeld (erster aktiver Bereich 22) des Matrixchips 20 mit einer ersten Binning-Stufe verwendet wird, zum Beispiel um einen ersten Abschnitt einer Materialbahn aufzunehmen. Wenn nun eine Zoomaufnahme erstellt werden soll, wird ein verkleinerter Sichtbereich aufgenommen (mit einem zweiten, kleineren aktiven Bereich 24 des Matrixchips 20). Für diesen Sichtbereich wird dann eine geringere Binning-Stufe mit möglichst gleich bleibender Bildauflösung für den verkleinerten Sichtbereich (bezogen auf den ursprünglichen Sichtbereich) gewählt, heißt auch einer größeren Anzahl an Pixeln pro mm für den verkleinerten Sichtbereich. Dies ist schematisch in **Fig. 3B** dargestellt. Dabei müssen nicht unbedingt immer zwei aufeinanderfolgende Aufnahmen eine unterschiedliche Binning-Stufe haben. Es kann vorkommen, dass eine große Anzahl an Aufnahmen mit der ersten Binning-Stufe erstellt wird und der Benutzer nur bei bestimmten Ereignissen, zum Beispiel weil er einen Fehler entdeckt hat, eine zweite Aufnahme mit der zweiten Binning Stufe erstellt wird. Auch kann, nachdem Aufnahmen "eingezoomt" angefertigt wurden, vom Benutzer wieder "ausgezoomt" werden, um wieder ein größeres Sichtfeld des Matrixchips 20 und somit einen größeren Abschnitt der Materialbahn beobachten zu können.

Die Materialbahn 10 kann zum Beispiel sich wiederholende Rapporte aufweisen, wobei z.B. bei der Bahnbeobachtung pro Rapport ein entsprechendes Trigger-Signal bereitgestellt wird, so dass der erste Zeitpunkt der ersten Aufnahme von einem ersten Trigger-Signal bestimmt werden kann und der zweite Zeitpunkt der zweiten Aufnahme von einem zweiten Trigger-Signal bestimmt werden kann. Dadurch ist es möglich, dass die ersten und zweiten Abschnitte korrespondierende Abschnitte und nicht identische Abschnitte auf der Materialbahn 10 darstellen. Andererseits ist es auch möglich, dass bei der Bahnbeobachtung eine Verstellung der X-Y Koordinaten durch den Benutzer erfolgt, so dass die Abschnitte nicht oder nicht komplett korrespondierende Abschnitte der Materialbahn 10 darstellen. Für die Triggerung kann zum Beispiel die oben erwähnte Steuereinheit oder ein Steuergerät eingesetzt werden, das hierfür Informationen von dem Sensor 140 erhält, um ein Triggersignal für die ersten Aufnahmen und die zweiten Aufnahmen an die Kamera 110 zu senden. Die Steuereinheit oder das Steuergerät können als externes Gerät vorgesehen sein. Es ist aber auch möglich, dass ein derartiges Gerät bzw. eine Steuerungslogik direkt in der Kamera 110 verbaut ist. Somit kann zum Beispiel der Sensor 140 direkt an dem Steuergerät oder an der Kamera 110 angeschlossen sein.

Ein zweites Beispiel für die Anwendung der erfindungsgemäßen Vorrichtung und Verfahren ist die Inspektion. Hier werden, zum Beispiel wenn Fehler auf der Materialbahn detektiert wurden, automatisch zweite Aufnahmen mit der zweiten Binning-Stufe erstellt, um den Fehler genauer inspizieren zu können.

Für spezielle Arten dieser Anwendung, zum Beispiel bei der Multiinspektion (einer Inspektion mit mehreren Beleuchtungsarten, mehr dazu weiter unten), können der erste Abschnitt und der zweite Abschnitt zwei identische Materialbahnabschnitte sein oder der zweite Abschnitt kann ein Teilabschnitt des ersten Abschnitts sein.

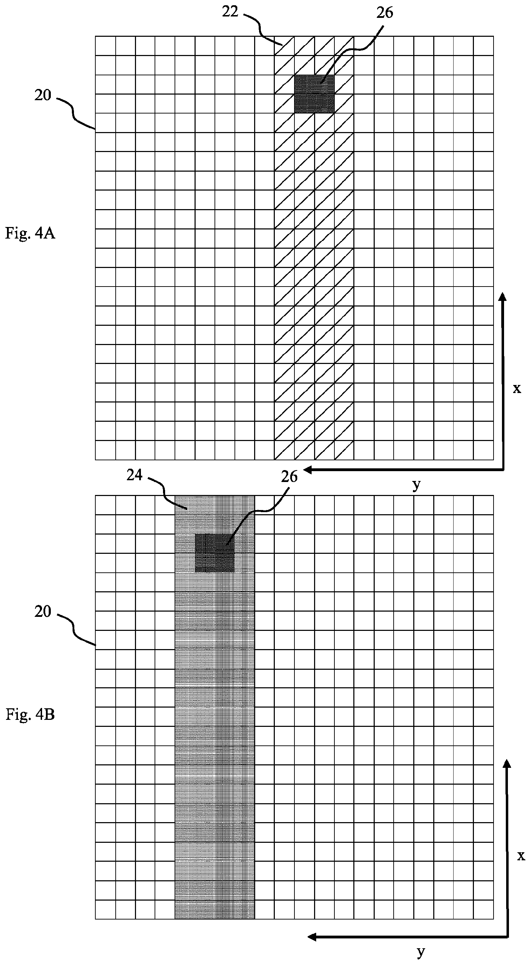

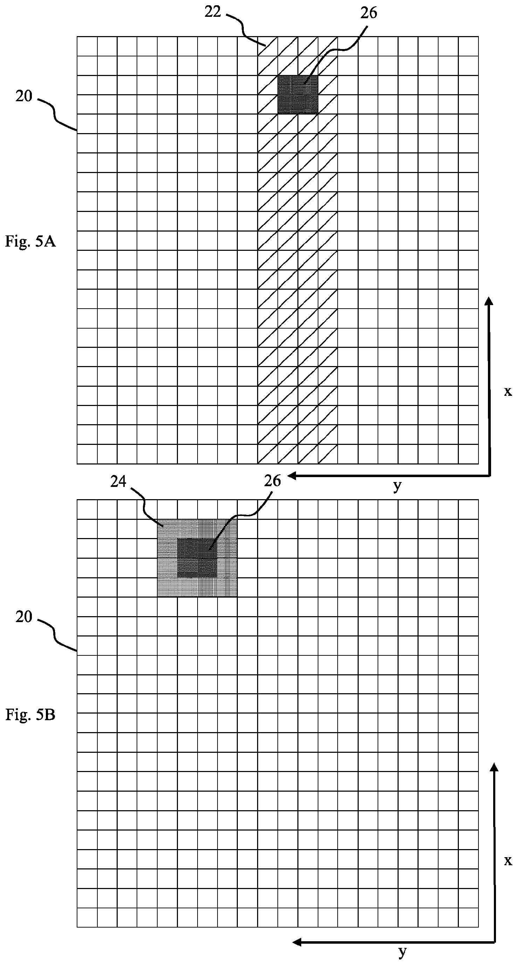

Wie in den **Fig. 3A** bis **Fig. 5b** dargestellt, kann für die erste Aufnahme jeweils ein erster aktiver Bereich 22 des Matrixchips 20 verwendet werden, um einen ersten Sichtbereich abzudecken und für die zweite Aufnahme ein zweiter aktiver Bereich 24 des Matrixchips 20 verwendet werden, um einen zweiten Sichtbereich abzudecken. Insbesondere kann der erste aktive Bereich 22 und entsprechend der erste Sichtbereich größer sein als der zweite aktive Bereich 24 und entsprechend der zweite Sichtbereich. Dies ist zum Beispiel in **Fig. 3A, 3B** und **Fig. 5A, 5B** dargestellt. Alternativ kann der zweite aktive Bereich 24 gleich groß wie der erste aktive Bereich 22 sein (siehe **Fig. 4A, 4B****).** Insbesondere kann der zweite aktive Bereich 24 ein Teil des ersten aktiven Bereichs 22 sein, insbesondere innerhalb des ersten aktiven Bereichs 22 liegen (siehe **Fig. 3A, 3B****).** Ein Vorteil dieses Verfahrens ist zum Beispiel das Reduzieren der Datenmengen sowie der benötigten Rechenleistungen durch die Anwendung der Binning-Funktion sowie einer "Region of Interest" (ROI) Funktion, da nur die jeweils benötigte Auflösung bzw. der jeweils benötigte Sichtbereich abgefragt beziehungsweise aufgenommen und verarbeitet wird. Eine reduzierte Datenlast wiederum lässt auch eine Erhöhung der Bildaufnahmefrequenz (FPS) zu.

Die Sichtbereiche der Kamera 110 bzw. des Matrixchips 20 können zum Beispiel eine Länge und eine Breite aufweisen, die entsprechend der Richtung der Materialbahnlänge y und der Richtung der Materialbahnbreite x angeordnet sind (die Richtungen x und y sind in den **Fig. 2** bis **6C** dargestellt). Bei einer Anpassung des Sichtbereichs werden nun die Länge und/oder die Breite des Sichtbereichs verändert. Wie schon erwähnt wird hier das Prinzip der "Region of Interest" (ROI) angewendet, bei der ausgenutzt wird, dass es möglich ist, bei Matrixchips 20 nur bestimmte Bereiche 22, 24 des Sensors zu aktivieren: für die erste Aufnahme kann zum Beispiel das gesamte Sichtfeld des Matrixsensors 20 (siehe **Fig. 3A****)** oder ein großer Teil des Sichtfelds verwendet werden. Für diesen Teil wird eine erste Binning-Stufe verwendet, die jeweils relativ viele physikalische Pixel zu einem virtuellen Pixel zusammenfasst. Um für die zweite Aufnahme eine Zoomfunktion zu ermöglichen, kann ein entsprechend ausgewählter zweiter Bereich 24 des Matrixchips 20 (siehe **Fig. 3B****)** verwendet werden, um einen zweiten (kleineren) Sichtbereich abzudecken (eine ROI wird ausgewählt). Für diesen Teil wird eine zweite Binning-Stufe verwendet, die jeweils relativ wenig physikalische Pixel zu einem virtuellen Pixel zusammenfasst oder das Binning komplett aufgelöst wird (1x1 Binning-Stufe). Alternativ kann das Sichtfeld auch für beide Aufnahmen gleich groß sein (siehe z.B. **Fig. 4A, 4B****).** Für die zweite Aufnahme (und in dem entsprechend aktiven Bereich des Matrixsensors 20) wird eine zweite Binning-Stufe gewählt, bei der im Vergleich zur ersten Binning-Stufe für die erste Aufnahme jeweils nur eine geringere Anzahl an physikalischen Pixeln zusammengefasst wird oder überhaupt kein Binning mehr angewendet wird. Die zweite Aufnahme hätte dadurch eine höhere Bildauflösung (Anzahl Pixel pro mm) bei gleich großem Sichtfeld wodurch die zweite Aufnahme genauer angezeigt werden würde oder z.B. auch eine bessere physikalische Auflösung für eine digitale Zoomfunktion ermöglicht werden könnte.

Außerdem ist es bei Aufnahmen mit unterschiedlich großen Sichtbereichen zum Beispiel möglich, die Anzahl an "gebinnten" virtuellen Pixeln beziehungsweise physikalischen Pixeln sowohl für die erste Aufnahme mit dem relativ größeren Sichtbereich als auch für die zweite Aufnahme mit dem kleineren Sichtbereich weitestgehend gleich zu halten. Diese Funktionen ermöglichen es ein Zoomobjektiv zu ersetzen und trotzdem über entsprechende gleich aufgelöste Zoomstufen zu verfügen. Es wird also versucht die Auflösung der genutzten aktiven Bereiche des Matrixchips 20 über die Binning-Stufen bei geänderten Sichtbereichen konstant zu halten. Die Zoomstufe ändert sich dabei entsprechend des verwendeten Sichtbereichs und/oder der verwendeten Binning-Stufen.

Außerdem kann bei entsprechender Auswahl des Matrixchips 20 und z.B. der zusätzlichen Verwendung einer digitalen Zoomfunktion bei Systemen mit zwei Kameras und zwei Objektiven (z.B. einem Weitwinkelobjektiv und einem Teleobjektiv, sogenannte Dualview Kamerasysteme) eine Kamera und ein Objektiv eingespart werden (ein Beispiel hierzu weiter unten).

Wie in **Fig. 3A** und **Fig. 3B** zu erkennen, die eine Anwendung des Verfahrens für eine Bahnbeobachtung zeigen, wird hier eigentlich im gleichen Verhältnis in X und Y Richtung von außen nach innen (oder von innen nach außen) ein entsprechend kleinerer 24 oder größerer Bereich 22 aktiviert, je nach dem von welcher Zoomstufe auf welche Zoomstufe gewechselt werden soll. Die Zeichnungen der Figuren sind hier rein beispielhaft zu verstehen. Der maximal mögliche aktive Sichtbereich (150 in y-Richtung, siehe **Fig. 1** bzw. **Fig. 3A** bzgl. der Matrixchipfläche in x- und y-Richtung) des Matrixchips 20 wird bei der Bahnbeobachtung meist voll ausgenützt und erst beim Hineinzoomen auf einen Bereich 24 begrenzt.

Bezüglich der möglichen Zoomstufen kann man das auch so beschreiben: je mehr physikalische Pixel für die erste Aufnahme zu einem virtuellen Pixel zusammengefasst wurden, umso mehr physikalische Zoomstufen sind für die zweite Aufnahme verfügbar, bei der dann in einer geringeren Binning-Stufe weniger physikalische Pixel zu einem virtuellen Pixel zusammengefasst werden oder die Binning-Funktion nicht mehr angewendet wird und die maximale physikalische Auflösung des Matrixchips 20 verwendet wird. Folglich gleicht das Ergebnis einem optischen Zoom, da nicht, wie zum Beispiel beim digitalen Zoom algorithmisch extrapoliert werden muss, sondern der Informationsgewinn physikalisch erzielt wird. Wenn die Binning-Funktion nicht mehr angewendet wird bzw. die maximale physikalische Auflösung des Matrixchips 20 verwendet wird, kann natürlich noch eine weitere digitale Zoomfunktion erfolgen, jedoch mit den bekannten Nachteilen, die sich aus der digitalen Zoomfunktion ergeben.

Weitere Vorteile sind zum Beispiel das Reduzieren der Datenmengen sowie der benötigten Rechenleistungen durch die Anwendung der Binning-Funktion sowie der ROI-Funktion, da nur die jeweils benötigte Auflösung bzw. der jeweils benötigte Sichtbereich abgefragt beziehungsweise aufgenommen und verarbeitet werden. Eine reduzierte Datenlast wiederum lässt auch eine Erhöhung der Bildaufnahmefrequenz (FPS) zu.

Das auf die Bahnbeobachtung angewandte erfindungsgemäße Prinzip soll im Folgenden an zwei Zahlenbeispielen im Vergleich mit bekannten Verfahren/Vorrichtungen verdeutlicht werden. In einem ersten Beispiel hat eine herkömmliche Vorrichtung zur Bahnbeobachtung mit Zoomobjektiv und einem Matrixsensor zum Beispiel folgende Daten:
Zoomobjektiv (12-fach)
Auflösung des verwendeten Sensors 1024x768
Sichtbereich max. ca. 100 mm x 71 mm
Sichtbereich min. ca. 9 mm x 7 mm

Die Auflösung von 1024x768 Pixel des Sensors bleibt über den optischen Zoom hinweg konstant. Im maximalen Sichtbereich (ca. 100 mm x 71 mm) beträgt die Bildauflösung 0,098 mm/Pixel, im minimalen Sichtbereich (ca. 9 mm x 7 mm) beträgt die Bildauflösung 0,009 mm/Pixel. Durch das Zoomobjektiv erhält man im minimalen Sichtbereich durch die konstante Auflösung von 1024x768 Pixel sogar eine bessere Bildauflösung in mm/Pixel.

Erfindungsgemäß soll das Zoomobjektiv eingespart werden, aber der Anspruch erhalten bleiben, dass die Qualität der Aufnahmen für die jeweiligen Sichtbereiche erhalten bleibt. Dies könnte erfindungsgemäß zum Beispiel mit einem Matrixchip mit 100 Megapixeln (Auflösung zum Beispiel 11548x8661) erreicht werden. Bei einer Binning-Stufe mit einem 11x11 Binning und einem entsprechenden maximalen Sichtbereich von ca. 100 mm x 71 mm bekommt man eine Bildauflösung von ca. 0,095 mm/virtuellem Pixel. Wenn nun eine Aufnahme entsprechend der Zoomstufe 12 des 12-fach Zoomobjektivs erstellt werden soll, kann die Binning-Funktion aufgelöst werden (entspricht der 1x1 Binning-Stufe) und das Sichtfeld auf ca. 9 mm x 7 mm beschränkt werden. Für diesen Bereich ergibt sich dann hier eine Bildauflösung von ca. 0,009 mm/Pixel. Wie man sieht kann mit einem 100 Megapixel Sensor eine mögliche physikalische Auflösung von Zoomstufe 1 bis zur Zoomstufe 12 der oben genannten beispielhaften Vorrichtung mit einem 12-fach Zoomobjektiv bezüglich der Auflösungswerte aufrechterhalten werden. Das Ergebnis gleicht also einem optischen Zoom, da nicht wie beim digitalen Zoom algorithmisch extrapoliert werden muss, sondern der Informationsgewinn physikalisch erzielt wird.

Bei einem zweiten Beispiel hat eine Vorrichtung mit zwei Kameras und zwei Objektiven (sogenanntes Dualview Kamerasystem) zum Beispiel die folgenden Daten:
Fixobjektive (Digitalzoom mit Weitwinkel- und Teleobjektiv)
Auflösung 2596x1944 (2x Matrixsensor)
Sichtbereich max. ca. 120 mm x 90 mm (Weitwinkelobjektiv)
Sichtbereich max. ca. 32 mm x 24 mm (Teleobjektiv)
Sichtbereich min. ca. 4 mm x 3 mm (Teleobjektiv)

Im Sichtbereich des Weitwinkelobjektivs von ca. 120 mm x 90 mm bis ca. 32 mm x 24 mm beträgt die Bildauflösung ca. 0,046 mm/Pixel. Die Bildauflösung ergibt sich allerdings nur für den Sichtbereich durch den Sensor mit Weitwinkelobjektiv (erste Kamera). Hier wird digital gezoomt, bis zu einem Sichtbereich von z.B. 32 mm x 24 mm. Dann wird auf den Sensor mit Teleobjektiv umgeschaltet (zweite Kamera). Hier ergibt sich für den Sichtbereich des Teleobjektivs von ca. 32 mm x 24 mm bis ca. 4 mm x 3 mm eine Bildauflösung von 0,012 mm/Pixel. Bis zum Sichtbereich von ca. min 4 mm x 3 mm wird dann wieder digital gezoomt. Das heißt, die Auflösung zum jeweiligen Sichtbereich wird nicht konstant gehalten, wie bei einem Bahnbeobachtungssystem mit Zoomobjektiv.

Durch Anwendung des Erfindungsprinzips soll hier eine Kamera und ein Objektiv eingespart werden, aber wieder der Anspruch erhalten bleiben, dass die Qualität der Aufnahmen für die jeweiligen Sichtbereiche erhalten bleibt. Dies könne erfindungsgemäß zum Beispiel mit einem Matrixchip mit 70 Megapixeln (Auflösung zum Beispiel 9735x7920) erreicht werden. Der Matrixchips wird für den maximalen Sichtbereich von 120 mm x 90 mm mit Binning-Stufe 4x4 gebinnt, so dass eine physikalische Auflösung bzw. virtuelle Auflösung (durch das Zusammenfassen physikalischer Pixel in der Binning-Stufe 4x4) von ca. 2434x1823 Pixel entsteht, was ca. 0,049 mm/virtuellem Pixel entspricht. Ab hier könnte theoretisch bis zum Sichtbereich von 32 mm x 24 mm digital gezoomt werden. Ab diesen Sichtbereich würde die Binning-Stufe auf 1x1 gesetzt bzw. das Binning komplett aufgelöst werden. Für diesen Bereich hat der Matrixchip dann eine gleichwertige Auflösung von 2596 x 1944 Pixel wie der Sensor der zweiten Kamera mit Teleobjektiv des bekannten Systems, was ca. 0,012 mm/Pixel entspricht. Ab hier würde dann wieder digital gezoomt werden, bis zum Sichtbereich von min. 4 mm x 3 mm. Die Bildauflösung mm/Pixel wäre dann im Sichtbereich 120 mm x 90 mm bis 32 mm x 24 mm auch immer bei 0,049 mm/Pixel und ab 32 x 24 mm bis 4 mm x 3 mm auch immer bei 0,012 mm/Pixel, da bei kleiner werdendem Sichtbereich auch die Auflösung kleiner wird. Zusätzlich könnten die nicht genutzten Binning-Stufen 3x3 und 2x2 ab einem gewissen Sichtbereich noch angewendet werden, um schon früher wieder bessere physikalische Auflösungswerte zu bekommen.

Bei der Bahnbeobachtung kann außerdem vorgesehen sein, dass die erste Aufnahme für einen Benutzer zum Beispiel auf einem Monitor dargestellt wird und die zweite Aufnahme in Antwort auf eine Benutzereingabe erstellt wird, die dann zum Beispiel für den Benutzer ebenfalls auf dem Monitor dargestellt wird. Die zweite Binning-Stufe sowie, optional, der zweite Sichtbereich, können dabei in Abhängigkeit von der Benutzereingabe ausgewählt werden. Falls ein digitaler Zoom verwendet wird, kann dieser ebenfalls in Abhängigkeit von der Benutzereingabe ausgewählt werden. Das heißt, die Anzahl der Pixel, die in der zweiten Binning-Stufe zusammengefasst werden (mehr oder weniger als in der ersten Binning-Stufe für die erste Aufnahme) sowie die Position und die Größe des Sichtbereichs (ROI) können benutzergesteuert sein.

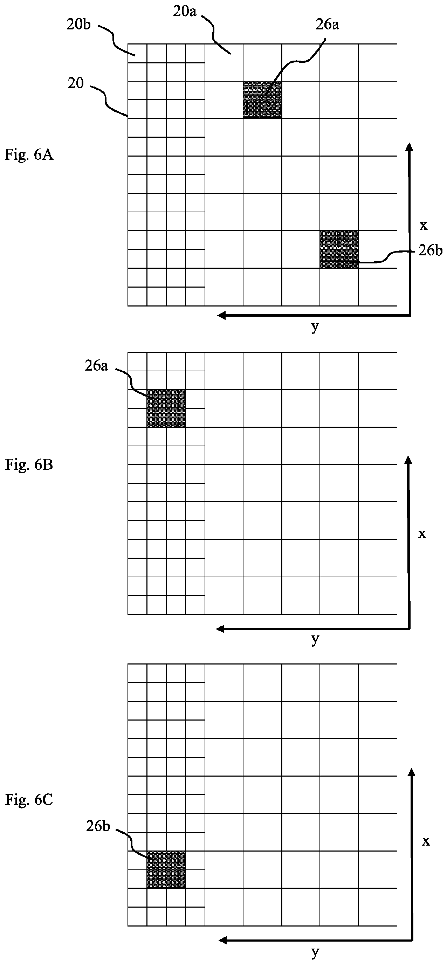

Wenn das Verfahren oder die Vorrichtung 100 für eine Inspektion der Materialbahn 10 verwendet wird, sind der erste aktive Bereich 22 und der zweite aktive Bereich 24 des Matrixchips 20 nicht identisch bzw. können sich überlappen oder auch nicht überlappen. Außerdem werden pro Rapport mehrere Triggersignale ausgegeben, da eine 100% Inspektion der Materialbahn 10 erfolgt. Das Verfahren umfasst dann das Auswerten der ersten Aufnahme und Bestimmen einer Position mindestens eines Fehlers 26 auf der Materialbahn 10. Anschließend können die zweite Binning-Stufe und/oder der zweite aktive Bereich 24 basierend auf der Position des Fehlers 26 bestimmt werden. **Fig. 4A** und **4B** zeigen ein Beispiel, mit einem ersten aktiven Bereich 22 in dem der Fehler 26 erkannt wurde (siehe **Fig. 4A). Fig. 4B** stellt den Matrixchip 20 für die zweite Aufnahme zum zweiten Zeitpunkt dar, bei der die Materialbahn in y-Richtung ein Stück weiter gelaufen ist. Hier wird nun der zweite aktive Bereich 24 in einer kleineren Binning-Stufe und somit mit größerer Auflösung verwendet, um den Fehler 26 genauer aufnehmen bzw. darstellen und inspizieren zu können. Das Verfahren ist bei der Inspektion insbesondere von Vorteil, wenn nicht nur die Binning-Stufe für den zweiten aktiven Bereich 24 geändert wird, so wie in **Fig. 4A** und **Fig. 4B** dargestellt, sondern auch der Sichtbereich in x- und y-Richtung auf die Position des Fehlers eingeschränkt werden kann. Dies ist in **Fig. 5A** und **5B** schematisch gezeigt. Dann ist es z.B. möglich die Binning-Stufe noch weiter zu reduzieren und somit eine höhere Auflösung für die Zoomfunktion zu erreichen, ohne die Datenmenge der Aufnahme zu erhöhen. In anderen Worten, die Binning-Funktion wird zumindest für einen Bereich des Matrixchips 20 aufgelöst oder die Binning-Stufe reduziert und optional die ROI durch Auswahl des zweiten aktiven Bereichs 24 so ausgewählt, dass sich ein Sichtbereich der Kamera für die zweite Aufnahme ergibt, der eine nachträgliche zweite Aufnahme des Fehlers 26 oder (mehrere Aufnahmen der Fehler 26a, 26b, siehe **Fig. 6A** bis **6C****)** mit höherer Auflösung ermöglicht, welche dann zum Beispiel für einen Benutzer abgelegt oder angezeigt werden kann. Dies soll anhand eines Zahlenbeispiels für das Binning bei der Inspektion einer Materialbahn nochmals verdeutlicht werden: Bei der Verwendung eines z.B. 16 Megapixel-Sensors (4920 x 3264), einer Sichtweite von 330 mm und einem 3x3 Binning, erreicht man eine Bildauflösung in Richtung der der Sichtweite für die "gebinnte" 100% Inspektion von (330/4920) * 3 = 0,2012 mm/virtuellem Pixel. Mit der Zoomfunktion für die zweite Aufnahme bei aufgelöstem Binning, welche partiell oder über den gesamten Matrixchips angewendet werden kann, erzielt man dann die dreifache Bildauflösung, sprich 0,067 mm/Pixel.

Zusätzlich kann auch die zweite Aufnahme zu dem zweiten Zeitpunkt basierend auf der Position des Fehlers 26 erstellt werden. Die Position des Fehlers 26 kann zum Beispiel in Koordinaten bezogen auf die Richtung der Materialbahnlänge y und die Richtung der Materialbahnbreite x bestimmt werden. Basierend auf diesen Koordinaten und der Bahngeschwindigkeit der Materialbahn 10 (zum Beispiel gemessen von dem Sensor 140) kann dann der zweite Zeitpunkt für die zweite Aufnahme bestimmt werden. Ebenso kann der zweite aktive Bereich 24 in Abhängigkeit von einer Materialbahngeschwindigkeit bestimmt werden. Für den zweiten aktiven Bereich 24 kann dessen Lage in Richtung der Materialbahnlänge y, in Richtung der Materialbahnbreite x und/oder eine Größe basierend auf der Position des Fehlers 26 und der Größe des Fehlers 26 bestimmt werden. Dies ist von Vorteil, da sich die zweite Aufnahme speziell auf den Fehlerbereich konzentriert. Dadurch kann die Datenlast weiter reduziert werden und die Auflösung erhöht werden, da nur ein kleiner Bereich des Matrixchips 20 mit reduzierter oder aufgelöster Binning-Funktion aktiviert werden muss. Das heißt, der erste und der zweite aktive Bereich 24 sowie die Anpassung der Binning-Stufe (bzw. das komplette Auflösen des Binnings) können variabel angepasst werden. Neben der Bildaufnahme für die 100% Inspektion und der Bildaufnahme eines Fehlers zur visuellen Anzeige kann auch zusätzlich eine Bildaufnahme für eine Bahnbeobachtung erfolgen.

Das erfindungsgemäße Prinzip kann zum Beispiel auch für eine variable Fehlerklassifikation genutzt werden, bei der es auch möglich ist, die zu erkennende Fehlergröße im laufenden Betrieb auch noch nach unten (bzw. auch nach oben) einzustellen. Dabei geht es darum, dass für Inspektionssysteme eigentlich vorgeben ist, bis zu welcher ungefähren Fehlergröße sie Fehler überhaupt inspizieren bzw. erkennen können. Wenn nun noch kleinere Fehler erkannt werden sollen, dann könnte die Auflösung für den ersten aktiven Bereich 22 erhöht werden (sofern dies die Hardware hergibt), damit noch kleinere Fehler erkannt werden können, die dann in dem zweiten aktiven Bereich 24 mittels der zweiten Aufnahme mit noch höherer Auflösung aufgenommen werden. In die andere Richtung ist dies natürlich auch möglich: wenn gewisse Fehlergrößen tolerierbar sind, dann kann die Auflösung für den ersten aktiven Bereich 22 auch erniedrigt werden. Es kann also über die verwendete Auflösung für den ersten aktiven Bereich 22 direkt eingestellt werden, ab welcher Fehlergröße die Fehler erkennbar sind. Falls ein Fehler erkannt wird, wird dieser im zweiten aktiven Bereich 24 mittels der zweiten Aufnahme dann mit einer höheren Auflösung aufgenommen.

Die Vorrichtung kann außerdem einen Materialbahn-Positionssensor umfassen, der zum Beispiel eine Position bzw. eine Breite der Materialbahn (in x-Richtung) bestimmt. Die Signale des Positionssensors können der Steuereinheit bereitgestellt werden, so dass darauf basierend die aktiven Bereiche 22, 24 des Matrixsensors bestimmt werden, insbesondere eine Größe und/oder eine Position der aktiven Bereiche 22, 24 in Richtung der Materialbahnbreite x eingestellt werden.

Mit dem hierin beschriebenen Verfahren sowie der hierin beschriebenen Vorrichtung 100 kann selbstredend auch die Position einer Mehrzahl an Fehlern 26a, 26b bestimmt werden und eine entsprechende Mehrzahl an zweiten Aufnahmen erstellt werden. Wenn die zwei oder mehr Fehler 26a, 26b die gleiche Position in Richtung der Materialbahnlänge y haben, so können diese zwei oder mehr Fehler 26a, 26b auch gleichzeitig in einer zweiten Aufnahme mit der entsprechend höheren Auflösung aufgenommen werden.

In dem in den **Fig. 6A** bis **6C** dargestellten Beispiel ist der Matrixchip 20 in erste und zweite Teile 20a, 20b aufgeteilt, wobei der erste Teil 20a mit der ersten Binning-Stufe arbeitet und für die erste Aufnahme verwendet wird und der zweite Teil 20b mit der zweiten Binning-Stufe arbeitet und für die zweite Aufnahme verwendet wird. Der zweite Teil 20b liegt dabei in Richtung der Materialbahnbewegung hinter dem ersten Teil 20a. Es kann dann zum Beispiel vorgesehen sein, dass der zweite Teil 20b nur aktiviert wird, wenn in der ersten Aufnahme ein Fehler 26a, 26b gefunden wurde. Der erste Teil 20a kann größer sein als der zweite Teil 20b. Der erste Teil 20a kann zum Beispiel mindestens doppelt so groß, mindestens dreimal so groß, mindestens fünfmal so groß, oder mindestens neunmal so groß wie der zweite Teil 20b sein. Der erste Teil 20a kann zum Beispiel ungefähr 90% des Matrixchips 20 einnehmen und der zweite Teil 20b ungefähr 10% des Matrixchips 20 einnehmen. Es kann außerdem vorteilhaft sein, für den zweiten Teil 20b den Kameraparameter "Gain" zu erhöhen, um eine schlechtere Lichtausbeute in diesem weniger gebinnten Zustand zu kompensieren bzw. das Bildrauschen zu reduzieren. Dies gilt natürlich auch für alle weiteren hierin beschriebenen Anwendungsbeispiele des erfindungsgemäßen Verfahrens. Der Kameraparameter "Gain" kann erhöht bzw. an eine gewisse Binning-Stufe angepasst werden, um eine eventuell schlechtere Lichtausbeute zu kompensieren.

Bei dieser Aufteilung des Matrixchips 20 können kontinuierlich erste Aufnahmen mit dem ersten Teil 20a und zweite Aufnahmen mit dem zweiten Teil 20b gemacht werden. Insbesondere können die zweiten Aufnahmen kontinuierlich in einem Ringspeicher gespeichert werden. Entsprechende zweite Aufnahmen können aus dem Ringspeicher ausgelesen und/oder für einen Benutzer bereitgestellt und/oder zum Beispiel auf einem Monitor dargestellt werden, falls in korrespondierenden ersten Aufnahmen mindestens ein Fehler 26a, 26b festgestellt wurde. Sowohl die ersten Aufnahmen als auch die zweiten Aufnahmen können 100% der Materialbahn 10 abdecken. Um 100% der Materialbahn 10 abzudecken muss die Anzahl der zweiten Aufnahmen entsprechend der Größenverhältnisse der ersten und zweiten Teile 20a, 20b angepasst werden. Wenn der erste Teil 20a wie oben beschrieben zum Beispiel 90% des Matrixchips 20 einnimmt und der zweite Teil 20b 10% des Matrixchips 20 einnimmt, dann müssen für jede erste Aufnahme mit dem ersten Teil 20a insgesamt neun zweite Aufnahmen mit dem zweiten Teil 20b erstellt werden. In anderen Worten, der zweite Teil 20b muss neunmal für neun Aufnahmen getriggert werden, während der erste Teil 20a nur einmal getriggert werden muss. Somit kann durch das mehrmalige triggern des zweiten Teils 20b eine Bildsequenz mit einer niedrigeren Binning-Stufe bzw. ohne Verwendung von Binning (was gleichzusetzen ist mit einer höheren physikalischen Auflösung) angefertigt werden, die ebenfalls 100% der Materialbahn 10 abdeckt. Wenn zum Beispiel der erste Teil 20a eine Binning-Stufe von 9x9 aufweist und der zweite Teil 20b eine Binning-Stufe von 1x1 hat (also quasi kein Binning angewendet wird) ist diese Vorgehensweise vorteilhaft, da die einzelnen Datenpakete (der ersten und zweiten Aufnahmen) immer eine gleichwertige Datengröße beinhalten, die auf eine verfügbare Bandbreite abgestimmt werden kann. Die verfügbare Bandbreite wird dann zu keinem Zeitpunkt überschritten. Für die Auslegung muss nur darauf geachtet werden, dass ein geeignetes Verhältnis der Parameter (Größenverhältnis erster Teil 20a zu zweitem Teil 20b des Matrixchips 20 und verwendete Binning-Stufe der jeweiligen Teile) gefunden wird und dieses mit der verfügbaren Bandbreite abgestimmt wird. In dem in **Fig. 6A** bis **6B** gezeigten Beispiel ist in **Fig. 6A** eine Aufnahme des ersten Teils 20a gezeigt, bei dem zwei Fehler 26a, 26b erkannt wurden. **Fig. 6B** zeig eine Aufnahme mit dem zweiten Teil 20b zu einem Zeitpunkt zu dem sich der erste Fehler 26a im Sichtbereich des zweiten Teils 20b befindet. **Fig. 6C** zeigt eine weitere Aufnahme mit dem zweiten Teil 20b zu einem späteren Zeitpunkt, zu dem sich der zweite Fehler 26b im Sichtbereich des zweiten Teils 20b befindet.

Ein weiterer Vorteil dieses Verfahrens bzw. dieser Vorrichtung 100 ist es also, dass auch die Möglichkeit besteht einmalige Fehler hochaufgelöst anzuzeigen, es müssen nicht unbedingt Wiederholungsfehler sein. In anderen Worten: bei der Inspektion einer Materialbahn ist es möglich, dass nach dem Erfassen und Erkennen eines Fehlers die ROI (in y-Richtung und optional auch in x-Richtung) und die Binning-Stufe angepasst werden und der gleiche Fehler hochaufgelöst nochmal erfasst wird.

In Ausgestaltungen des Verfahrens und der Vorrichtung 100 kann außerdem vorgesehen sein zusätzlich eine digitale Zoomfunktion zu verwenden, insbesondere zum Beispiel durch Interpolation mehrerer benachbarter physikalischer Pixel bzw. virtueller Pixel, die bei der Verwendung der Binning-Funktion entstanden sind. Durch die digitale Zoomfunktion können zum Beispiel Übergangsbereiche bei der Auflösung zwischen entsprechenden Binning-Stufen abgedeckt werden. Dies ist bei dem hierin beschriebenen Verfahren vorteilhaft, da durch die Binning-Stufen die physikalische Auflösung immer wieder angepasst werden kann, so dass eine Verschlechterung durch die Verwendung des digitalen Zooms kaum merklich wahrnehmbar ist. In anderen Worten: schon bevor ein Bild durch zu starken digitalen Zoom und entsprechende Interpolation unscharf oder gepixelt aussieht (z.B. bei der Darstellung auf einem Monitor), kann die nächste Binning-Stufe verwendet werden, welche wieder eine höhere physikalische Auflösung bereitstellt. Wie weiter oben bereits erwähnt, kann die digitale Zoomfunktion ebenfalls noch verwendet werden, nachdem die Binning-Stufen komplett aufgelöst wurden, also die physikalische Zoomfunktion erschöpft ist.

Wie schon beschrieben, sind die Auswahl der Binning-Stufen sowie der zu aktivierenden Bereiche (z.B. gemäß einer ROI) relativ frei bestimmbar. Dadurch ist es neben einer Stufen-Zoomfunktion möglich, dass die aktiven Bereiche 22, 24 des Matrixchips 20 und die Binning-Stufen, sowie optional die Anwendung eines digitalen Zooms, für die ersten und zweiten Aufnahmen so aufeinander abgestimmt werden, dass eine stufenlose Zoomfunktion bereitgestellt wird. Andererseits ist es bei der Verwendung des Verfahrens mit Stufen-Zoomfunktion möglich, dass die ausgewählten Sichtbereiche und die Binning-Stufen so aneinander angepasst werden, dass für jeden Sichtbereich z.B. die gleiche Auflösung (bezogen auf die Gesamtzahl der (virtuellen) Pixel pro Sichtbereich) gegeben ist. Dadurch bleibt die Größe der pro Aufnahme verschickten Datenpakete jeweils gleich. Entsprechend können die Binning-Stufen auch so angepasst werden, dass die Auflösung in einem gleich bleibenden Sichtbereich reduziert wird, um zum Beispiel die Bildaufnahmefrequenz (FPS) zu erhöhen. Wenn zum Beispiel eine Auflösung von 2048 x 1024 verwendet wird dann können über ein Single Gigabit Ethernet Interface 56 FPS an die Steuereinheit gesendet werden. Wird stattdessen die Auflösung von 2048 x 512 verwendet (zum Beispiel durch 1x2 Binning oder durch Einschränkung des Sichtbereichs), dann können über das Single Gigabit Ethernet Interface 112 FPS an die Steuereinheit gesendet werden. Die FPS und der Sichtbereich bestimmen dann letztlich wieder die maximal mögliche Bahngeschwindigkeit für eine 100% Inspektion der Materialbahn 10.

Entsprechend der Anwendung können also die jeweils aktiven Bereiche 22, 24 und dadurch der jeweilige Sichtbereich sowie die zu verwendende Binning-Stufe in Abhängigkeit einer maximalen physikalischen Auflösung des Matrixchips 20, der Bahngeschwindigkeit sowie der Eigenschaften eines optional für die Aufnahmen verwendeten Objektivs 112 optimal aufeinander abgestimmt werden. Es können natürlich auch die Eigenschaften des optional verwendeten Objektivs in Abhängigkeit der maximalen physikalischen Auflösung des Matrixchips 20 angepasst werden. Der Matrixchip 20 kann zum Beispiel eine Auflösung von mindestens 16 Megapixeln, mindestens 32 Megapixeln, mindestens 50 Megapixeln, mindestens 70 Megapixeln oder mindestens 100 Megapixeln aufweisen. Hierin ist insbesondere aufgrund der schnellen Weiterentwicklung in diesem Bereich keine Grenze nach oben zu sehen.

Wie weiter oben schon erwähnt, können die hierin beschriebenen Verfahren und Vorrichtungen auch für eine Multiinspektion der Materialbahn 10 verwendet werden. Dabei wird eine zusätzliche Aufnahme des ersten Abschnitts zu einem dritten Zeitpunkt unter Verwendung der ersten Binning-Stufe erstellt, wobei für die zusätzliche Aufnahme des ersten Abschnitts ein anderer aktiver Bereich des Matrixchips 20 verwendet wird als für die erste Aufnahme des ersten Abschnitts. Der dritte Zeitpunkt liegt nach dem ersten Zeitpunkt. Insbesondere liegt der dritte Zeitpunkt vor dem zweiten Zeitpunkt oder nach dem zweiten Zeitpunkt, je nach Anwendung. Für die beiden Aufnahmen des ersten Abschnitts werden unterschiedliche Beleuchtungsarten zum Beleuchten der Materialbahn 10 verwendet, so dass man zwei unterschiedliche Bildsequenzen (mit zwei unterschiedlichen Beleuchtungsarten) der kompletten Materialbahn 10 erstellen kann. Es kann zum Beispiel einmal mit Beleuchtungseinrichtung 120 beleuchtet werden und einmal mit Beleuchtungseinrichtung 130 beleuchtet werden. Außerdem wird dann eine zusätzliche Aufnahme des zweiten Abschnitts zu einem vierten Zeitpunkt unter Verwendung der zweiten Binning-Stufe erstellt, wobei für die zusätzliche Aufnahme des zweiten Abschnitts ein anderer aktiver Bereich des Matrixchips 20 verwendet wird als für die erste Aufnahme des zweiten Abschnitts. Der vierte Zeitpunkt liegt nach dem zweiten oder nach dem dritten Zeitpunkt. Für die zusätzliche Aufnahme des zweiten Abschnitts kann die gleiche Beleuchtungsart wie für die zusätzliche Aufnahme des ersten Abschnitts verwendet werden, insbesondere eine andere Beleuchtungsart als für die zweite Aufnahme des zweiten Abschnitts. Dies würde dann in Summe zum Beispiel bedeuten: kontinuierlich jeweils eine Aufnahme mit erster Beleuchtung und kleiner Auflösung, erster Beleuchtung und großer Auflösung, zweiter Beleuchtung und kleiner Auflösung und zweiter Beleuchtung großer Auflösung. Für die Aufnahmen des ersten Abschnitts und des zweiten Abschnitts sowie für die zusätzlichen Aufnahmen des ersten Abschnitts und des zweiten Abschnitts können somit unterschiedliche Beleuchtungsarten zum Beleuchten der Materialbahn 10 verwendet werden.

Die Multiinspektion ist nicht auf jeweils zwei Aufnahmen pro Abschnitt mit zwei Beleuchtungsarten beschränkt. Neben einer Multiinspektion mit zwei Bildsequenzen kann die Vorrichtung auch für eine Multiinspektion mit drei oder mehr Bildsequenzen verwendet werden. Dafür werden dann weitere Aufnahmen der entsprechenden Abschnitte zu entsprechenden weiteren Zeitpunkten unter Verwendung entsprechender weiterer aktiver Bereiche des Matrixchips 20 erstellt. Für diese weiteren Aufnahmen können weitere Beleuchtungsarten zur Beleuchtung der Materialbahn 10 verwendet werden. Selbstverständlich können neben den gezeigten Beleuchtungseinrichtungen 120, 130 weitere Beleuchtungseinrichtungen vorgesehen sein. Die Beleuchtungsarten können zum Beispiel ausgewählt werden aus der Gruppe bestehend aus Auflichtbeleuchtungen, Hintergrundbeleuchtungen und Durchlichtbeleuchtungen. Dabei können ein Reihe an Beleuchtungseigenschaften realisiert werden: homogene oder inhomogene Beleuchtung, direkte, diffuse, fokussierte oder kollimierte Beleuchtung, koaxiale, transmissive und/oder polarisierte Beleuchtung, unterschiedliche Beleuchtungswinkel und Hellfeld- oder Dunkelfeldbeleuchtung, Lichtwellenlängen im UV, sichtbaren oder IR Bereich (um z.B. auch Sicherheitsmerkmale inspizieren zu können), einfarbige (monochrom), mehrfarbige (polychrom) oder farblich abstimmbar bzw. steuerbare (RGB-) Beleuchtung, Flächenbeleuchtung oder Zeilenbeleuchtung, konstante oder geblitzte Beleuchtung, bei Auflicht- und Durchlichtbeleuchtung können diese alternierend oder gleichzeitig zum Einsatz kommen. Die Beleuchtungseinrichtungen können als Tunnelbeleuchtungssystem, Tube-Beleuchtungssystem oder Dome-Beleuchtungssystem ausgestaltet sein, sowie modular bzw. an die Materialbahnbreite angepasst sein. Als Leuchtmittel können dabei zum Beispiel Glühlampen, Gasentladungslampen, LED-Beleuchtung, OLED-Beleuchtung oder Laser-Beleuchtung zum Einsatz kommen. Die jeweiligen Beleuchtungsarten und Eigenschaften können zum Beispiel für die folgende Multiinspektion eingesetzt werden: Druckbildinspektion mit sichtbarem Auflicht, Etiketteninspektion mit sichtbarem Durchlicht und Inspektion von UV Sicherheitsmerkmalen mit UV Auflicht.

Zusammengefasst bieten das hierin beschriebene Verfahren sowie die Vorrichtung 100 die folgenden Funktionalitäten:
- Bildaufnahme für 100% Inspektion mit erster Beleuchtung
- Bildaufnahme für 100% Inspektion mit zweiter Beleuchtung
- Bildaufnahme Fehler in hoher Auflösung zur visuellen Anzeige (sporadisch) mit erster Beleuchtung
- Bildaufnahme Fehler in hoher Auflösung zur visuellen Anzeige (sporadisch) mit zweiter Beleuchtung
- Bildaufnahme für Bahnbeobachtung mit erster Beleuchtung
- Bildaufnahme für Bahnbeobachtung mit zweiter Beleuchtung

Die Bildaufnahme für die Bahnbeobachtung kann dabei zum Beispiel schon mit der Bildsequenz der 100% Inspektion erfolgen bzw. das Bild der 100% Inspektion kann als Bild für die Bahnbeobachtung ausgegeben werden. Das ausgegebene Bild entspricht dann der Auflösung, welche für die Inspektion hergenommen wurde. Wenn eine extra Bildaufnahme der Bahnbeobachtung mit der ersten und/oder zweiten Beleuchtung gemacht wird, können wieder der Sichtbereich und die Bildauflösung entsprechend angepasst werden und somit physikalisch gezoomt werden.

Die Vorrichtung kann auch eine Mehrzahl an Kameras 110 aufweisen, die jeweils einen Matrixchip mit Binning-Funktion und ROI-Funktion haben, wobei jede der Kameras entsprechende Aufnahmen für die vorangehend beschrieben Verfahren der Bahnbeobachtung und/oder Inspektion erstellt. Die Kameras können über die Materialbahnbreite x verteilt angeordnet sein, so dass die Sichtbereiche der Kameras in Richtung der Materialbahnbreite x aneinander angrenzen oder überlappen. Von den Aufnahmen der Mehrzahl an Kameras 110 kann eine zusammenhängende Aufnahme bestimmt werden. Außerdem können mechanische Versätze der Kameras in Richtung der Materialbahnlänge y zueinander durch eine entsprechende Auswahl aktiver Bereiche der Matrixchips 20 ausgeglichen werden. Somit kann das Kamera-Array einen in Richtung der Materialbahnlänge y gleich positionierten durchgehenden Materialbahnabschnitt erfassen.

Neben einer oder mehrerer Kameras auf der Vorderseite der Materialbahn 10 können auch mindestens eine Kamera 110 auf der Vorderseite der Materialbahn 10 und mindestens eine Kamera auf einer Rückseite der Materialbahn 10 vorgesehen sein, wobei wieder jede der Kameras entsprechende Aufnahmen für die vorangehend beschrieben Verfahren der Bahnbeobachtung und/oder Inspektion erstellen kann. Dies ermöglicht die Beobachtung bzw. Inspektion beider Materialbahnseiten.

Je nach verwendeter Brennweite des Objektivs 112 und in Abhängigkeit der verwendeten ROIs auf dem Matrixchips 20 ist es möglich, dass es zu unterschiedlichen geometrischen Verzeichnungen bezüglich der Bildaufnahme und somit zu Ungenauigkeiten kommt. Diese können zum Beispiel über eine Verzeichnungskalibrierung kompensiert werden. Es kann auch eine Verzeichnungskorrektur vorgesehen sein, die dynamisch an eine jeweilige ROI angepasst wird.

## Patentansprüche

1. Verfahren zur Beobachtung und/oder Inspektion von Materialbahnen, die sich in Richtung einer Materialbahnlänge (y) und/oder einer Materialbahnbreite (x) bewegen, wobei das Verfahren die folgenden Schritte umfasst:
Erstellen einer ersten Aufnahme eines ersten Abschnitts einer Materialbahn (10) zu einem ersten Zeitpunkt mit einer Kamera (110), die einen Matrixchip (20) mit Binning-Funktion umfasst; und
Erstellen einer zweiten Aufnahme eines zweiten Abschnitts der Materialbahn (10) zu einem zweiten Zeitpunkt mit der Kamera (110);
wobei der erste Abschnitt und der zweite Abschnitt zwei identische oder korrespondierende Materialbahnabschnitte sind oder der zweite Abschnitt ein Teilabschnitt oder ein korrespondierender Teilabschnitt des ersten Abschnitts der Materialbahn (10) ist;
wobei für die erste Aufnahme eine erste Binning-Stufe verwendet wird, bei der jeweils eine erste Anzahl an Pixeln des Matrixchips (20) unter Verwendung der Binning-Funktion zusammengefasst wird und für die zweite Aufnahme eine zweite Binning-Stufe verwendet wird, bei der jeweils eine zweite Anzahl an Pixeln des Matrixchips (20) unter Verwendung der Binning-Funktion zusammengefasst wird, und wobei die erste Anzahl an Pixeln die jeweils zusammengefasst werden höher ist als die zweite Anzahl an Pixeln die jeweils zusammengefasst werden, wodurch eine physikalische Zoomfunktion für die zweite Aufnahme erzielt wird; und
wobei für die erste Aufnahme ein erster aktiver Bereich (22) des Matrixchips (20) verwendet wird, um einen ersten Sichtbereich abzudecken, und für die zweite Aufnahme ein zweiter aktiver Bereich (24) des Matrixchips (20) verwendet wird, um einen zweiten Sichtbereich abzudecken, wobei der erste aktive Bereich (22) und entsprechend der erste Sichtbereich gleich groß oder größer ist als der zweite aktive Bereich (24) und entsprechend der zweite Sichtbereich; und
wobei der erste aktive Bereich und der zweite aktive Bereich nicht identisch sind.

2. Verfahren gemäß Anspruch 1, **dadurch gekennzeichnet, dass** der zweite aktive Bereich (24) ein Teil des ersten aktiven Bereichs (22) ist und optional, wobei der zweite aktive Bereich (24) innerhalb des ersten aktiven Bereichs (22) angeordnet ist.

3. Verfahren gemäß irgendeinem der vorangehenden Ansprüche, **dadurch gekennzeichnet, dass** das Verfahren außerdem folgende Schritte umfasst:
Darstellen der ersten Aufnahme für einen Benutzer;
Erstellen der zweiten Aufnahme in Antwort auf eine Benutzereingabe, und
Darstellen der zweiten Aufnahme für den Benutzer;
insbesondere wobei die zweite Binning-Stufe sowie, optional, der zweite Sichtbereich, in Abhängigkeit von der Benutzereingabe ausgewählt wird.

4. Verfahren gemäß Anspruch 1, **dadurch gekennzeichnet, dass** der erste Bereich und der zweite Bereich sich überlappen oder nicht überlappen, und wobei das Verfahren außerdem die folgenden Schritte umfasst:
Auswerten der ersten Aufnahme und Bestimmen einer Position mindestens eines Fehlers (26) auf der Materialbahn (10); und
Auswählen der zweiten Binning-Stufe und/oder des zweiten aktiven Bereichs basierend auf der Position des Fehlers (26) auf der Materialbahn (10).

5. Verfahren gemäß Anspruch 4, **dadurch gekennzeichnet, dass** die zweite Aufnahme zu dem zweiten Zeitpunkt basierend auf der Position des Fehlers (26) erstellt wird.

6. Verfahren gemäß Anspruch 4 oder Anspruch 5, **dadurch gekennzeichnet, dass** die Position einer Mehrzahl an Fehlern (26a, 26b) bestimmt wird und eine entsprechende Mehrzahl an zweiten Aufnahmen erstellt wird.

7. Verfahren gemäß irgendeinem der Ansprüche 1 bis 6, **dadurch gekennzeichnet, dass** der Matrixchip (20) in erste und zweite Teile (20a, 20b) aufgeteilt ist, wobei der erste Teil (20a) mit der ersten Binning-Stufe arbeitet und für die erste Aufnahme verwendet wird und der zweite Teil (20b) mit der zweiten Binning-Stufe arbeitet und für die zweite Aufnahme verwendet wird, insbesondere wobei der zweite Teil (20b) in Richtung der Materialbahnbewegung hinter dem ersten Teil (20a) liegt.

8. Verfahren gemäß Anspruch 7, **dadurch gekennzeichnet, dass** der zweite Teil (20b) nur aktiviert wird, wenn in der ersten Aufnahme ein Fehler (26, 26a, 26b) gefunden wurde.

9. Verfahren gemäß Anspruch 7 oder Anspruch 8, **dadurch gekennzeichnet, dass** kontinuierlich erste Aufnahmen mit dem ersten Teil (20a) und zweite Aufnahmen mit dem zweiten Teil (20b) gemacht werden, insbesondere wobei die zweiten Aufnahmen kontinuierlich in einem Ringspeicher gespeichert werden, und optional, wobei entsprechende zweite Aufnahmen aus dem Ringspeicher ausgelesen und/oder für einen Benutzer bereitgestellt und/oder dargestellt werden, falls in korrespondierenden ersten Aufnahmen mindestens ein Fehler (26, 26a, 26b) festgestellt wurde.

10. Verfahren gemäß irgendeinem der vorangehenden Ansprüche, **dadurch gekennzeichnet, dass** außerdem ein digitaler Zoom verwendet wird, insbesondere durch Interpolation mehrerer benachbarter physikalischer Pixel bzw. virtueller Pixel, die bei der Verwendung der Binning-Funktion entstanden sind, um Übergangsbereiche bei der Auflösung zwischen entsprechenden Binning-Stufen abzudecken.

11. Verfahren gemäß irgendeinem der vorangehenden Ansprüche, **dadurch gekennzeichnet, dass** aktive Bereiche des Matrixchips (20) und die Binning-Stufen, sowie optional die Anwendung eines digitalen Zooms, für die ersten und zweiten Aufnahmen so aufeinander abgestimmt werden, dass eine stufenlose Zoomfunktion bereitgestellt wird.

12. Verfahren gemäß irgendeinem der vorangehenden Ansprüche, **dadurch gekennzeichnet, dass** das Verfahren außerdem folgenden Schritt umfasst:
in Abhängigkeit einer maximalen physikalischen Auflösung des Matrixchips (20), Bestimmen eines optimalen Verhältnisses aus jeweils aktivem Bereich des Matrixchips (20) und verwendeter Binning-Stufe, sowie insbesondere, Bestimmen der optimalen Eigenschaften für ein optional für die Aufnahmen verwendetes Objektiv (112).

13. Verfahren gemäß irgendeinem der vorangehenden Ansprüche, **dadurch gekennzeichnet, dass** das Verfahren außerdem folgenden Schritt umfasst:
Erstellen einer zusätzlichen Aufnahme des ersten Abschnitts zu einem dritten Zeitpunkt unter Verwendung der ersten Binning-Stufe, wobei für die zusätzliche Aufnahme des ersten Abschnitts ein anderer aktiver Bereich des Matrixchips (20) verwendet wird als für die erste Aufnahme des ersten Abschnitts.

14. Verfahren gemäß Anspruch 13, dadurch genkennzeichnet, dass der dritte Zeitpunkt nach dem ersten Zeitpunkt liegt, insbesondere, wobei der dritte Zeitpunkt vor dem zweiten Zeitpunkt liegt oder nach dem zweiten Zeitpunkt liegt.

15. Verfahren gemäß Anspruch 13 oder Anspruch 14, **dadurch gekennzeichnet, dass** für die beiden Aufnahmen des ersten Abschnitts unterschiedliche Beleuchtungsarten zum Beleuchten der Materialbahn (10) verwendet werden.

16. Verfahren gemäß irgendeinem der Ansprüche 13 bis 15, **dadurch gekennzeichnet, dass** das Verfahren außerdem folgenden Schritt umfasst:
Erstellen einer zusätzlichen Aufnahme des zweiten Abschnitts zu einem vierten Zeitpunkt unter Verwendung der zweiten Binning-Stufe, wobei für die zusätzliche Aufnahme des zweiten Abschnitts ein anderer aktiver Bereich des Matrixchips (20) verwendet wird als für die zweite Aufnahme des zweiten Abschnitts, insbesondere, wobei für die beiden Aufnahmen des zweiten Abschnitts unterschiedliche Beleuchtungsarten zum Beleuchten der Materialbahn (10) verwendet werden.

17. Verfahren gemäß Anspruch 16, dadurch genkennzeichnet, dass der vierte Zeitpunkt nach dem zweiten oder nach dem dritten Zeitpunkt liegt.

18. Verfahren gemäß irgendeinem der vorangehenden Ansprüche, **dadurch gekennzeichnet, dass** eine Mehrzahl an Kameras (110) verwendet wird, die jeweils einen Matrixchip mit Binning-Funktion aufweisen, wobei jede der Kameras entsprechende Aufnahmen der vorangehenden Ansprüche erstellt.

19. Vorrichtung (100) zur Beobachtung und/oder Inspektion von Materialbahnen, die sich in Richtung einer Materialbahnlänge (y) und/oder einer Materialbahnbreite (x) bewegen, umfassend:
eine Kamera (110), die einen hochauflösenden Matrixchip (20) umfasst, wobei der Matrixchip (20) mit einer Binning-Funktion ausgestattet ist; und eine Steuereinheit;
wobei die Steuereinheit ausgelegt ist während der Beobachtung und/oder der Inspektion der Materialbahn zu veranlassen, dass mit der Kamera (110) eine erste Aufnahme eines ersten Abschnitts der Materialbahn (10) zu einem ersten Zeitpunkt erstellt wird;
mit der Kamera (110) eine zweite Aufnahme eines zweiten Abschnitts der Materialbahn (10) zu einem zweiten Zeitpunkt erstellt wird;
wobei der erste Abschnitt und der zweite Abschnitt zwei identische oder korrespondierende Materialbahnabschnitte sind oder der zweite Abschnitt ein Teilabschnitt oder ein korrespondierender Teilabschnitt des ersten Abschnitts der Materialbahn (10) ist; und
wobei für die erste Aufnahme eine erste Binning-Stufe verwendet wird, bei der jeweils eine erste Anzahl an Pixeln des Matrixchips (20) unter Verwendung der Binning-Funktion zusammengefasst wird und für die zweite Aufnahme eine zweite Binning-Stufe verwendet wird, bei der jeweils eine zweite Anzahl an Pixeln des Matrixchips (20) unter Verwendung der Binning-Funktion zusammengefasst wird, und wobei die erste Anzahl an Pixeln die jeweils zusammengefasst werden höher ist als die zweite Anzahl an Pixeln die jeweils zusammengefasst werden, wodurch eine physikalische Zoomfunktion für die zweite Aufnahme erzielt wird; und
wobei die Steuereinheit ausgelegt ist für die erste Aufnahme einen ersten aktiven Bereich (22) des Matrixchips (20) zu verwenden, um einen ersten Sichtbereich abzudecken und für die zweite Aufnahme einen zweiten aktiven Bereich (24) des Matrixchips (20) zu verwenden, um einen zweiten Sichtbereich abzudecken, wobei der erste aktive Bereich (22) und entsprechend der erste Sichtbereich gleich groß oder größer ist als der zweite aktive Bereich (24) und entsprechend der zweite Sichtbereich; und wobei der erste aktive Bereich und der zweite aktive Bereich nicht identisch sind.

20. Vorrichtung gemäß Anspruch 19, **dadurch gekennzeichnet, dass** der erste Bereich (22) und der zweite Bereich (24) sich überlappen oder nicht überlappen, und wobei die Steuereinheit ausgelegt ist die erste Aufnahme auszuwerten und eine Position mindestens eines Fehlers (26) auf der Materialbahn (10) zu bestimmen; und
die zweite Binning-Stufe und/oder den zweiten aktiven Bereich (24) basierend auf der Position des Fehlers (26) auf der Materialbahn (10) zu bestimmen.

21. Vorrichtung gemäß Anspruch 20, **dadurch gekennzeichnet, dass** die Steuereinheit ausgelegt ist die zweite Aufnahme zu dem zweiten Zeitpunkt basierend auf der Position des Fehlers (26) zu erstellen.

22. Vorrichtung gemäß irgendeinem der Ansprüche 19 bis 21, **dadurch gekennzeichnet, dass** die Vorrichtung (100) außerdem einen Sensor (140) umfasst, der ausgelegt ist, die zurückgelegte Wegstrecke oder die Geschwindigkeit der Materialbahn (10) in Richtung der Materialbahnlänge (y) zu ermitteln und entsprechende Signale bereitzustellen.

23. Vorrichtung gemäß irgendeinem der Ansprüche 19 bis 22, **dadurch gekennzeichnet, dass** der Matrixchip (20) in erste und zweite Teile (20a, 20b) aufgeteilt ist, wobei der erste Teil (20a) mit der ersten Binning-Stufe arbeitet und für die erste Aufnahme verwendet wird und der zweite Teil (20b) mit der zweiten Binning-Stufe arbeitet und für die zweite Aufnahme verwendet wird, insbesondere wobei der zweite Teil (20b) in Richtung der Materialbahnbewegung hinter dem ersten Teil (20a) angeordnet ist.

24. Vorrichtung gemäß Anspruch 23, **dadurch gekennzeichnet, dass** die Steuereinheit ausgelegt ist zu veranlassen, dass kontinuierlich erste Aufnahmen mit dem ersten Teil (20a) und zweite Aufnahmen mit dem zweiten Teil (20b) gemacht werden, insbesondere wobei die zweiten Aufnahmen kontinuierlich in einem Ringspeicher gespeichert werden, und optional, wobei die Steuereinheit ausgelegt ist zu veranlassen, dass entsprechende zweite Aufnahmen aus dem Ringspeicher ausgelesen und/oder für einen Benutzer bereitgestellt und/oder auf der Anzeige dargestellt werden, falls in korrespondierenden ersten Aufnahmen mindestens ein Fehler (26, 26a, 26b) festgestellt wurde.

25. Vorrichtung gemäß irgendeinem der Ansprüche 19 bis 24, **dadurch gekennzeichnet, dass** die Steuereinheit außerdem ausgelegt ist zu veranlassen, dass in Abhängigkeit einer maximalen physikalischen Auflösung des Matrixchips (20) ein optimales Verhältnis aus jeweils aktivem Bereich des Matrixchips (20) und verwendeter Binning-Stufe bestimmt wird.

26. Vorrichtung gemäß irgendeinem der Ansprüche 19 bis 25, **dadurch gekennzeichnet, dass** die Materialbahn (10) sich wiederholende Rapporte aufweist, und dadurch, dass die Steuereinheit ausgelegt ist entsprechende Trigger-Signale zu verarbeiten, die der Vorrichtung pro Rapport bereitgestellt werden, insbesondere wobei die Steuereinheit ausgelegt ist den ersten Zeitpunkt basierend auf einem ersten Trigger-Signal zu bestimmen und den zweiten Zeitpunkt basierend auf einem zweiten Trigger-Signal zu bestimmen, so dass die ersten und zweiten Abschnitte korrespondierende Abschnitte auf der Materialbahn (10) darstellen.

27. Vorrichtung gemäß Anspruch 26, wenn abhängig von Anspruch 22, **dadurch gekennzeichnet, dass** die Trigger-Signale von der Steuereinheit bereitgestellt werden, wobei die Steuereinheit Informationen von dem Sensor (140) erhält, insbesondere wobei die Steuereinheit als externes Gerät vorgesehen ist oder wobei die Steuereinheit direkt in die Kamera (110) integriert ist.

28. Vorrichtung gemäß irgendeinem der Ansprüche 19 bis 27, **dadurch gekennzeichnet, dass** die Steuereinheit ausgelegt ist zu veranlassen, dass eine zusätzliche Aufnahme des ersten Abschnitts zu einem dritten Zeitpunkt unter Verwendung der ersten Binning-Stufe erstellt wird, wobei für die zusätzliche Aufnahme des ersten Abschnitts ein anderer aktiver Bereich des Matrixchips (20) verwendet wird als für die erste Aufnahme des ersten Abschnitts.

29. Vorrichtung gemäß Anspruch 28, dadurch genkennzeichnet, dass die Steuereinheit ausgelegt ist zu veranlassen, dass der dritte Zeitpunkt nach dem ersten Zeitpunkt liegt, insbesondere, wobei der dritte Zeitpunkt vor dem zweiten Zeitpunkt liegt oder nach dem zweiten Zeitpunkt liegt.

30. Vorrichtung gemäß Anspruch 28 oder Anspruch 29, **dadurch gekennzeichnet, dass** die Vorrichtung (100) erste und zweite Beleuchtungseinrichtungen (120, 130) aufweist, so dass für die beiden Aufnahmen des ersten Abschnitts unterschiedliche Beleuchtungsarten zum Beleuchten der Materialbahn (10) verwendet werden.

31. Vorrichtung gemäß irgendeinem der Ansprüche 28 bis 30, **dadurch gekennzeichnet, dass** die Steuereinheit ausgelegt ist zu veranlassen, dass eine zusätzliche Aufnahme des zweiten Abschnitts zu einem vierten Zeitpunkt unter Verwendung der zweiten Binning-Stufe erstellt wird, wobei für die zusätzliche Aufnahme des zweiten Abschnitts ein anderer aktiver Bereich des Matrixchips (20) verwendet wird als für die zweite Aufnahme des zweiten Abschnitts, insbesondere, wobei für die beiden Aufnahmen des zweiten Abschnitts unterschiedliche Beleuchtungsarten zum Beleuchten der Materialbahn (10) verwendet werden.

32. Vorrichtung gemäß Anspruch 31, **dadurch gekennzeichnet, dass** die Steuereinheit ausgelegt ist zu veranlassen, dass der vierte Zeitpunkt nach dem zweiten Zeitpunkt oder nach dem dritten Zeitpunkt liegt.

33. Vorrichtung gemäß irgendeinem der Ansprüche 19 bis 32, **dadurch gekennzeichnet, dass** die Vorrichtung (100) eine Mehrzahl an Kameras aufweist, die jeweils einen Matrixchip mit Binning-Funktion umfassen, wobei die Steuereinheit ausgelegt ist zu veranlassen, dass jede der Kameras entsprechende Aufnahmen der vorangehenden Ansprüche 19 bis 32 erstellt.

34. Vorrichtung gemäß irgendeinem der Ansprüche 19 bis 33, **dadurch gekennzeichnet, dass** mindestens eine Kamera (110) auf einer Vorderseite der Materialbahn (10) und mindestens eine Kamera auf einer Rückseite der Materialbahn (10) vorgesehen ist, wobei die Steuereinheit ausgelegt ist zu veranlassen, dass jede der Kameras entsprechende Aufnahmen der vorangehenden Ansprüche 19 bis 33 erstellt.

## Claims

1. A method for monitoring and/or inspecting material webs which are moving in the direction of a material web length (y) and/or a material web width (x), wherein the method comprises the following steps:
taking a first picture of a first portion of a material web (10) at a first point in time with a camera (110) which comprises a matrix chip (20) with a binning function; and
taking a second picture of a second portion of the material web (10) at a second point in time with the camera (110);
wherein the first portion and the second portion are two identical or corresponding material web portions, or the second portion is a subsidiary portion or a corresponding subsidiary portion of the first portion of the material web (10);
wherein for the first picture, a first binning step level is used in which in each case a first number of pixels of the matrix chip (20) are grouped together using the binning function and, for the second picture, a second binning step level is used in which in each case a second number of pixels of the matrix chip (20) are grouped together using the binning function, and wherein the first number of pixels which are in each case grouped together is higher than the second number of pixels which are in each case grouped together, as a result of which a physical zoom function is achieved for the second picture; and
wherein for the first picture, a first active area (22) of the matrix chip (20) is used in order to cover a first field of vision and, for the second picture, a second active area (24) of the matrix chip (20) is used in order to cover a second field of vision, wherein the first active area (22) and correspondingly the first field of vision are as large as or larger than the second active area (24) and correspondingly the second field of vision, and wherein the first active area and the second active area are not identical.

2. The method according to claim 1, **characterized in that** the second active area (24) is part of the first active area (22) and, optionally, wherein the second active area (24) is arranged within the first active area (22).

3. The method according to any of the preceding claims, **characterized in that** the method also comprises the following steps:
displaying the first picture for a user;
taking the second picture in response to a user input, and
displaying the second picture for the user;
in particular wherein the second binning step level and, optionally, the second field of vision are selected as a function of the user input.

4. The method according to claim 1, **characterized in that** the first active area and the second active area overlap or do not overlap, and wherein the method also comprises the following steps:
evaluating the first picture and determining a position of at least one error (26) on the material web (10); and
selecting the second binning step level and/or the second active area on the basis of the position of the error (26) on the material web (10).

5. The method according to claim 4, **characterized in that** the second picture is taken at the second point in time on the basis of the position of the error (26).

6. The method according to claim 4 or claim 5, **characterized in that** the position of a multiplicity of errors (26a, 26b) are determined and a corresponding multiplicity of second pictures is taken.

7. The method according to any of the claims 1 to 6, **characterized in that** the matrix chip (20) is divided into first and second parts (20a, 20b), wherein the first part (20a) operates at the first binning step level and is used for the first picture and the second part (20b) operates at the second binning step level and is used for the second picture, in particular wherein the second part (20b) lies behind the first part (20a) in the direction of movement of the material web.

8. The method according to claim 7, **characterized in that** the second part (20b) is only activated if an error (26, 26a, 26b) has been found in the first picture.

9. The method according to claim 7 or claim 8, **characterized in that** first pictures are continually taken with the first part (20a) and second pictures are continually taken with the second part (20b), in particular wherein the second pictures are continually saved in a ring memory and optionally wherein corresponding second pictures are read from the ring memory and/or provided and/or displayed for a user if at least one error (26, 26a, 26b) has been found in corresponding first pictures.

10. The method according to any of the preceding claims, **characterized in that** a digital zoom is also used, in particular through interpolation of a number of adjacent physical pixels or virtual pixels which are produced when the binning function is used in order to cover transition areas in the resolution between corresponding binning step levels.

11. The method according to any of the preceding claims, **characterized in that** for the first and second pictures, active areas of the matrix chip (20) and the binning step levels, and optionally the use of a digital zoom, are matched to one another such that an infinitely variable zoom function is provided.

12. The method according to any of the preceding claims, **characterized in that** the method also comprises the following step: as a function of a maximum physical resolution of the matrix chip (20), determining an optimum ratio based in each case on the active area of the matrix chip (20) and the binning step level used, and in particular determining the optimum properties for a lens (112) optionally used for the pictures.

13. The method according to any of the preceding claims, **characterized in that** the method also comprises the following step:
taking an additional picture of the first portion at a third point in time using the first binning step level, wherein a different active area of the matrix chip (20) is used for the additional picture of the first portion than for the first picture of the first portion.

14. The method according to claim 13, **characterized in that** the third point in time is after the first point in time, in particular wherein the third point in time is before the second point in time or after the second point in time.

15. The method according to claim 13 or claim 14, **characterized in that** different types of lighting are used to light the material web (10) for the two pictures of the first portion.

16. The method according to any of claims 13 to 15, **characterized in that** the method also comprises the following step:
taking an additional picture of the second portion at a fourth point in time using the second binning step level, wherein a different active area of the matrix chip (20) is used for the additional picture of the second portion than for the second picture of the second portion, in particular wherein different types of lighting are used to light the material web (10) for the two pictures of the second portion.

17. The method according to claim 16, **characterized in that** the fourth point in time is after the second or after the third point in time.

18. The method according to any of the preceding claims, **characterized in that** a multiplicity of cameras (110) are used, each of which has a matrix chip with a binning function, wherein each of the cameras takes corresponding pictures of the preceding claims.

19. A device (100) for monitoring and/or inspecting material webs which are moving in the direction of a material web length (y) and/or a material web width (x), comprising:
a camera (110) which comprises a high-resolution matrix chip (20), wherein the matrix chip (20) has a binning function; and
a control unit;
wherein the control unit is designed to have during monitoring and/or inspecting the material web a first picture of a first portion of the material web (10) taken at a first point in time with the camera (110); and
a second picture of a second portion of the material web (10) taken at a second point in time with the camera (110);
wherein the first portion and the second portion are two identical or corresponding material web portions, or the second portion is a subsidiary portion or a corresponding subsidiary portion of the first portion of the material web (10); and
wherein, for the first picture, a first binning step level is used in which in each case a first number of pixels of the matrix chip (20) are grouped together using the binning function and, for the second picture, a second binning step level is used in which in each case a second number of pixels of the matrix chip (20) are grouped together using the binning function, and wherein the first number of pixels which are in each case grouped together is higher than the second number of pixels which are in each case grouped together, as a result of which a physical zoom function is achieved for the second picture; and
wherein the control unit is designed, for the first picture, to use a first active area (22) of the matrix chip (20) in order to cover a first field of vision and, for the second picture, to use a second active area (24) of the matrix chip (20) in order to cover a second field of vision, wherein the first active area (22) and correspondingly the first field of vision are as large as or larger than the second active area (24) and correspondingly the second field of vision; and
wherein the first active area and the second active area are not identical.

20. The device according to claim 19, **characterized in that** the first area (22) and the second area (24) overlap or do not overlap, and wherein the control unit is designed to evaluate the first picture and to determine a position of at least one error (26) on the material web (10); and
to determine the second binning step level and/or the second active area (24) on the basis of the position of the error (26) on the material web (10).

21. The device according to claim 20, **characterized in that** the control unit is designed to take the second picture at the second point in time on the basis of the position of the error (26).

22. The device according to any of the claims 19 to 21, **characterized in that** the device (100) also comprises a sensor (140) which is designed to determine the distance travelled by or the speed of the material web (10) in the direction of the material web length (y) and to provide corresponding signal s.

23. The device according to any of the claims 19 to 22, **characterized in that** the matrix chip (20) is divided into first and second parts (20a, 20b), wherein the first part (20a) operates at the first binning step level and is used for the first picture and the second part (20b) operates at the second binning step level and is used for the second picture, in particular wherein the second part (20b) is arranged behind the first part (20a) in the direction of movement of the material web.

24. The device according to claim 23, **characterized in that** the control unit is designed to have first pictures continually taken with the first part (20a) and second pictures continually taken with the second part (20b), in particular wherein the second pictures are continually saved in a ring memory and optionally wherein the control unit is designed to have corresponding second pictures read from the ring memory and/or provided and/or displayed on the display for a user if at least one error (26, 26a, 26b) has been found in corresponding first pictures.

25. The device according to any of the claims 19 to 24, **characterized in that** the control unit is also designed to have an optimum ratio based in each case on the active area of the matrix chip (20) and the binning step level used determined as a function of a maximum physical resolution of the matrix chip (20).

26. The device according to any of the claims 19 to 25, **characterized in that** the material web (10) has repeats, and **in that** the control unit is designed to process corresponding trigger signals which are provided to the device per repeat, in particular wherein the control unit is designed to determine the first point in time on the basis of a first trigger signal and to determine the second point in time on the basis of a second trigger signal so that the first and second portions represent corresponding portions on the material web (10).

27. The device according to claim 26, when dependent on claim 22, **characterized in that** the trigger signals are provided by the control unit, wherein the control unit receives information from the sensor (140), in particular wherein the control unit is provided as an external instrument or wherein the control unit is integrated directly into the camera (110).

28. The device according to any of the claims 19 to 27, **characterized in that** the control unit is designed to have an additional picture of the first portion taken at a third point in time using the first binning step level, wherein a different active area of the matrix chip (20) is used for the additional picture of the first portion than for the first picture of the first portion.

29. The device according to claim 28, **characterized in that** the control unit is designed to have the third point in time be after the first point in time, in particular wherein the third point in time is before the second point in time or after the second point in time.

30. The device according to claim 28 or claim 29, **characterized in that** the device (100) has first and second lighting devices (120, 130) such that different types of lighting are used to light the material web (10) for the two pictures of the first portion.

31. The device according to any of the claims 28 to 30, **characterized in that** the control unit is designed to have an additional picture of the second portion taken at a fourth point in time using the second binning step level, wherein a different active area of the matrix chip (20) is used for the additional picture of the second portion than for the second picture of the second portion, in particular wherein different types of lighting are used to light the material web (10) for the two pictures of the second portion.

32. The device according to claim 31, **characterized in that** the control unit is designed to have the fourth point in time be after the second point in time or after the third point in time.

33. The device according to any of the claims 19 to 32, **characterized in that** the device (100) has a multiplicity of cameras, each of which has a matrix chip with a binning function, wherein the control unit is designed to have each of the cameras take corresponding pictures of the preceding claims 19 to 32.

34. The device according to any of the claims 19 to 33, **characterized in that** at least one camera (110) is provided on a front side of the material web (10) and at least one camera is provided on a rear side of the material web (10), wherein the control unit is designed to have each of the cameras take corresponding pictures of the preceding claims 19 to 33.

## Revendications

1. Procédé permettant d'observer et/ou d'inspecter des bandes de matériau qui se déplacent dans le sens d'une longueur de bande de matériau (y) et/ou d'une largeur de bande de matériau (x), le procédé comprenant les étapes suivantes consistant à :
réaliser une première prise de vue d'une première section d'une bande de matériau (10) à un premier instant à l'aide d'une caméra (110) qui comprend une puce à matrice (20) dotée d'une fonction de classification ; et
réaliser une deuxième prise de vue d'une deuxième section de la bande de matériau (10) à un deuxième instant à l'aide de la caméra (110) ;
la première section et la deuxième section étant deux sections de bande de matériau identiques ou correspondantes, ou la deuxième section est une section partielle ou une section partielle correspondante de la première section de la bande de matériau (10) ;
dans lequel, pour la première prise de vue, un premier niveau de classification est utilisé pour lequel respectivement un premier nombre de pixels de la puce à matrice (20) est regroupé en utilisant la fonction de classification, et pour la deuxième prise de vue, un deuxième niveau de classification est utilisé pour lequel respectivement un deuxième nombre de pixels de la puce à matrice (20) est regroupé en utilisant la fonction de classification, et le premier nombre de pixels qui sont regroupés respectivement est supérieur au deuxième nombre de pixels qui sont regroupés respectivement, de façon à obtenir une fonction de zoom physique pour la deuxième prise de vue ; et
dans lequel, pour la première prise de vue, une première zone active (22) de la puce à matrice (20) est utilisée afin de couvrir un premier champ de vision, et pour la deuxième prise de vue, une deuxième zone active (24) de la puce à matrice (20) est utilisée afin de couvrir un deuxième champ de vision, la première zone active (22), et de façon correspondante le premier champ de vision, étant de taille identique ou plus grands que la deuxième zone active (24) et de façon correspondante le deuxième champ de vision ; et
la première zone active et la deuxième zone active n'étant pas identiques.

2. Procédé selon la revendication 1, **caractérisé en ce que** la deuxième zone active (24) fait partie de la première zone active (22), et en option, dans lequel la deuxième zone active (24) est disposée à l'intérieur de la première zone active (22).

3. Procédé selon l'une quelconque des revendications précédentes, **caractérisé en ce que** le procédé comprend en outre les étapes suivantes consistant à :
représenter la première prise de vue pour un utilisateur ;
réaliser la deuxième prise de vue en réponse à une entrée utilisateur, et représenter la deuxième prise de vue pour l'utilisateur ;
dans lequel en particulier le deuxième niveau de classification, ainsi qu'en option le deuxième champ de vision, sont sélectionnés en fonction de l'entrée utilisateur.

4. Procédé selon la revendication 1, **caractérisé en ce que** la première zone et la deuxième zone se chevauchent ou ne se chevauchent pas, et le procédé comprenant en outre les étapes suivantes consistant à :
évaluer la première prise de vue et déterminer une position d'au moins un défaut (26) sur la bande de matériau (10) ; et
sélectionner le deuxième niveau de classification et/ou la deuxième zone active sur la base de la position du défaut (26) sur la bande de matériau (10).

5. Procédé selon la revendication 4, **caractérisé en ce que** la deuxième prise de vue est réalisée au deuxième instant sur la base de la position du défaut (26).

6. Procédé selon la revendication 4 ou 5, **caractérisé en ce que** la position d'une pluralité de défauts (26a, 26b) est déterminée, et une pluralité correspondante de prises de vue est réalisée.

7. Procédé selon l'une quelconque des revendications 1 à 6, **caractérisé en ce que** la puce à matrice (20) est divisée en première et deuxième parties (20a, 20b), la première partie (20a) fonctionnant avec le premier niveau de classification et étant utilisée pour la première prise de vue, et la deuxième partie (20b) fonctionnant avec le deuxième niveau de classification et étant utilisée pour la deuxième prise de vue, dans lequel en particulier la deuxième partie (20b) se trouve après la première partie (20a) dans le sens du déplacement de bande de matériau.

8. Procédé selon la revendication 7, **caractérisé en ce que** la deuxième partie (20b) n'est activée que si un défaut (26, 26a, 26b) a été trouvé sur la première prise de vue.

9. Procédé selon la revendication 7 ou 8, **caractérisé en ce que** des premières prises de vue avec la première partie (20a) et des deuxièmes prises de vue avec la deuxième partie (20b) sont réalisées en continu, dans lequel en particulier les deuxièmes prises de vue sont stockées en continu dans une mémoire annulaire, et dans lequel en option des deuxièmes prises de vue correspondantes sont lues à partir de la mémoire annulaire et/ou fournies à et/ou représentées pour un utilisateur si au moins un défaut (26, 26a, 26b) a été constaté sur des premières prises de vue correspondantes.

10. Procédé selon l'une quelconque des revendications précédentes, **caractérisé en ce qu'**en outre un zoom numérique est utilisé, en particulier par interpolation de plusieurs pixels physiques ou pixels virtuels adjacents qui se sont créés lors de l'utilisation de la fonction de classification pour couvrir des zones de transition à la résolution entre des niveaux de classification correspondants.

11. Procédé selon l'une quelconque des revendications précédentes, **caractérisé en ce que** les zones actives de la puce à matrice (20) et les niveaux de classification, ainsi qu'en option l'application d'un zoom numérique, pour les premières et deuxièmes prises de vue sont adaptés les uns aux autres de façon à fournir une fonction de zoom continue.

12. Procédé selon l'une quelconque des revendications précédentes, **caractérisé en ce que** le procédé comprend en outre l'étape suivante consistant à :
en fonction d'une résolution physique maximale de la puce à matrice (20), déterminer une relation optimale entre respectivement une zone active de la puce à matrice (20) et un niveau de classification utilisé, ainsi qu'en particulier, déterminer les propriétés optimales pour un objectif (112) utilisé en option pour les prises de vue.

13. Procédé selon l'une quelconque des revendications précédentes, **caractérisé en ce que** le procédé comprend en outre l'étape suivante consistant à :
réaliser une prise de vue supplémentaire de la première section à un troisième instant en utilisant le première niveau de classification, dans lequel, pour la prise de vue supplémentaire de la première section, une autre zone active de la puce à matrice (20) que pour la première prise de vue de la première section est utilisée.

14. Procédé selon la revendication 13, **caractérisé en ce que** le troisième instant est situé après le premier instant, dans lequel en particulier le troisième instant est situé avant le deuxième instant ou après le deuxième instant.

15. Procédé selon la revendication 13 ou 14, **caractérisé en ce que** pour les deux prises de vue de la première section, différents types d'éclairage sont utilisés pour éclairer la bande de matériau (10).

16. Procédé selon l'une quelconque des revendications 13 à 15, **caractérisé en ce que** le procédé comprend en outre l'étape suivante consistant à :
réaliser une prise de vue supplémentaire de la deuxième section à un quatrième instant en utilisant le deuxième niveau de classification, dans lequel, pour la prise de vue supplémentaire de la deuxième section, une autre zone active de la puce à matrice (20) que pour la deuxième prise de vue de la deuxième section est utilisée, dans lequel en particulier pour les deux prises de vue de la deuxième section, différents types d'éclairage sont utilisés pour éclairer la bande de matériau (10).

17. Procédé selon la revendication 16, **caractérisé en ce que** le quatrième instant est situé après le troisième instant.

18. Procédé selon l'une quelconque des revendications précédentes, **caractérisé en ce qu'**une pluralité de caméras (110) est utilisée qui présentent respectivement une puce à matrice dotée d'une fonction de classification, chacune des caméras réalisant les prises de vue correspondantes des revendications précédentes.

19. Dispositif (100) permettant d'observer et/ou d'inspecter des bandes de matériau qui se déplacent dans le sens d'une longueur de bande de matériau (y) et/ou d'une largeur de bande de matériau (x), comprenant :
une caméra (110) qui comprend une puce à matrice (20) haute résolution, la puce à matrice (20) étant équipée d'une fonction de classification ; et
une unité de commande ;
l'unité de commande étant conçue, pendant l'observation et/ou l'inspection de la bande de matériau, pour faire que
la caméra (110) réalise une première prise de vue d'une première section de la bande de matériau (10) à un premier instant ;
la caméra (110) réalise une deuxième prise de vue d'une deuxième section de la bande de matériau (10) à un deuxième instant ;
la première section et la deuxième section étant deux sections de bande de matériau identiques ou correspondantes, ou la deuxième section étant une section partielle ou une section partielle correspondante de la première section de la bande de matériau (10) ; et
dans lequel, pour la première prise de vue, un premier niveau de classification est utilisé pour lequel respectivement un premier nombre de pixels de la puce à matrice (20) est regroupé en utilisant la fonction de classification, et pour la deuxième prise de vue, un deuxième niveau de classification est utilisé pour lequel respectivement un deuxième nombre de pixels de la puce à matrice (20) est regroupé en utilisant la fonction de classification, et le premier nombre de pixels qui sont regroupés respectivement est supérieur au deuxième nombre de pixels qui sont regroupés respectivement, de façon à obtenir une fonction de zoom physique pour la deuxième prise de vue ; et
l'unité de commande étant conçue pour utiliser pour la première prise de vue une première zone active (22) de la puce à matrice (20) afin de couvrir un premier champ de vision, et pour utiliser pour la deuxième prise de vue une deuxième zone active (24) de la puce à matrice (20) afin de couvrir un deuxième champ de vision, la première zone active (22), et de façon correspondante le premier champ de vision, étant de taille identique ou plus grands que la deuxième zone active (24) et de façon correspondante le deuxième champ de vision ; et
la première zone active et la deuxième zone active n'étant pas identiques.

20. Dispositif selon la revendication 19, **caractérisé en ce que** la première zone (22) et la deuxième zone (24) se chevauchent ou ne se chevauchent pas, et l'unité de commande est conçue pour évaluer la première prise de vue et pour déterminer une position d'au moins un défaut (26) sur la bande de matériau (10) ; et
pour déterminer le deuxième niveau de classification et/ou la deuxième zone active (24) sur la base de la position du défaut (26) sur la bande de matériau (10).

21. Dispositif selon la revendication 20, **caractérisé en ce que** l'unité de commande est conçue pour réaliser la deuxième prise de vue au deuxième instant sur la base de la position du défaut (26).

22. Dispositif selon l'une quelconque des revendications 19 à 21, **caractérisé en ce que** le dispositif (100) comprend en outre un capteur (140) qui est conçu pour établir le trajet parcouru ou la vitesse de la bande de matériau (10) dans le sens de la longueur de bande de matériau (y) et pour fournir des signaux correspondants.

23. Dispositif selon l'une quelconque des revendications 19 à 22, **caractérisé en ce que** la puce à matrice (20) est divisée en première et deuxième parties (20a, 20b), la partie (20a) fonctionnant avec le premier niveau de classification et étant utilisée pour la première prise de vue, et la deuxième partie (20b) fonctionnant avec le deuxième niveau de classification et étant utilisée pour la deuxième prise de vue, dans lequel en particulier la deuxième partie (20b) est disposée après la première partie (20a) dans le sens du déplacement de bande de matériau.

24. Dispositif selon la revendication 23, **caractérisé en ce que** l'unité de commande est conçue pour faire que des premières prises de vue avec la première partie (20a) et des deuxièmes prises de vue avec la deuxième partie (20b) soient réalisées en continu, dans lequel en particulier les deuxièmes prises de vue sont stockées en continu dans une mémoire annulaire, et dans lequel en option des deuxièmes prises de vue correspondantes sont lues à partir de la mémoire annulaire et/ou fournies à un utilisateur et/ou représentées sur un affichage si au moins un défaut (26, 26a, 26b) a été constaté sur des premières prises de vue correspondantes.

25. Dispositif selon l'une quelconque des revendications 19 à 24, **caractérisé en ce que** l'unité de commande est en outre conçue pour faire qu'en fonction d'une résolution physique maximale de la puce à matrice (20), une relation optimale entre respectivement une zone active de la puce à matrice (20) et le niveau de classification utilisé soit déterminée.

26. Dispositif selon l'une quelconque des revendications 19 à 25, **caractérisé en ce que** la bande de matériau (10) présente des rapports répétitifs, et **en ce que** l'unité de commande est conçue pour traiter des signaux de déclenchement correspondants qui sont fournis au dispositif pour chaque rapport, dans lequel en particulier l'unité de commande est conçue pour déterminer le premier instant sur la base d'un premier signal de déclenchement et le deuxième instant sur la base d'un deuxième signal de déclenchement de sorte que les première et deuxième sections représentent des sections correspondantes sur la bande de matériau (10).

27. Dispositif selon la revendication 26 lorsqu'elle dépend de la revendication 22, **caractérisé en ce que** les signaux de déclenchement sont fournis par l'unité de commande, l'unité de commande recevant des informations du capteur (140), dans lequel en particulier l'unité de commande est prévue sous la forme d'un appareil externe ou l'unité de commande est intégrée directement dans la caméra (110).

28. Dispositif selon l'une quelconque des revendications 19 à 27, **caractérisé en ce que** l'unité de commande est conçue pour faire qu'une prise de vue supplémentaire de la première section soit réalisée à un troisième instant en utilisant le premier niveau de classification, dans lequel, pour la prise de vue supplémentaire de la première section, une autre zone active de la puce à matrice (20) que pour la première prise de vue de la première section est utilisée.

29. Dispositif selon la revendication 28, **caractérisé en ce que** l'unité de commande est conçue pour faire que le troisième instant se situe après le premier instant, dans lequel en particulier le troisième instant se situe avant le deuxième instant ou après le deuxième instant.

30. Dispositif selon la revendication 28 ou 29, **caractérisé en ce que** le dispositif (100) présente des premier et deuxième dispositifs d'éclairage (120, 130) de sorte que pour les deux prises de vue de la première section différents types d'éclairage sont utilisés pour éclairer la bande de matériau (10).

31. Dispositif selon l'une quelconque des revendications 28 à 30, **caractérisé en ce que** l'unité de commande est conçue pour faire qu'une prise de vue supplémentaire de la deuxième section soit réalisée à un quatrième instant en utilisant le deuxième niveau de classification, dans lequel, pour la prise de vue supplémentaire de la deuxième section, une autre zone active de la puce à matrice (20) que pour la deuxième prise de vue de la deuxième section est utilisée, dans lequel en particulier, pour les deux prises de vue de la deuxième section, différents types d'éclairage sont utilisés pour éclairer la bande de matériau (10).

32. Dispositif selon la revendication 31, **caractérisé en ce que** l'unité de commande est conçue pour faire que le quatrième instant se situe après le deuxième instant ou après le troisième instant.

33. Dispositif selon l'une quelconque des revendications 19 à 32, **caractérisé en ce que** le dispositif (100) présente une pluralité de caméras qui comprennent respectivement une puce à matrice dotée d'une fonction de classification, l'unité de commande étant conçue pour faire que chacune des caméras réalise les prises de vue correspondantes des revendications précédentes 19 à 32.

34. Dispositif selon l'une quelconque des revendications 19 à 33, **caractérisé en ce qu'**au moins une caméra (110) est prévue sur une face avant de la bande de matériau (10) et au moins une caméra est prévue sur une face arrière de la bande de matériau (10), l'unité de commande étant conçue pour faire que chacune des caméras réalise les prises de vue correspondantes des revendications précédentes 19 à 33.
